# FASCICULE DE BREVET EUROPEEN

(11) **EP 1 979 419 B1**
(45) Date de publication et mention de la délivrance du brevet: **30.08.2017**
(21) Numéro de dépôt: 06842306.0
(22) Date de dépôt: 19.12.2006
(51) Int. Cl.: C09C 1/02, C09C 3/04, B02C 23/06, D21H 19/38, D21H 17/67, C01F 11/18

(54) **UTILISATION D'AGENTS DE CO-BROYAGE DANS UN PROCEDE DE FABRICATION DE CARBONATES DE CALCIUM NATUREL ET PRECIPITE CO-BROYES, SUSPENSIONS ET PIGMENTS SECS OBTENUS ET LEURS UTILISATIONS**
VERWENDUNG VON CO-MAHLMITTELN ZUR HERSTELLUNG VON NATÜRLICHEN CALCIUMCARBONATEN, SO ERHALTENE CO-GEMAHLENE PRÄZIPITATIONEN, SUSPENSIONEN UND TROCKENPIGMENTE UND DEREN VERWENDUNG
USE OF CO-GRINDING AGENTS IN A METHOD FOR PRODUCING NATURAL CALCIUM CARBONATES, OBTAINED CO-GROUND PRECIPITATIONS, SUSPENSIONS AND DRY PIGMENTS AND THE USE THEREOF

(30) Priorité: 30.12.2005 FR 0513504
(43) Date de publication de la demande: 15.10.2008
(73) Titulaire: COATEX, 69730 Genay (FR)
(72) Inventeur: JACQUEMET, Christian, 69005 Lyon (FR); MONGOIN, Jacques, 69650 Quincieux (FR)
(74) Mandataire: Balmefrezol, Ludovic Francis Pierre
(86) Numéro de dépôt international: PCT/IB2006/003806
(87) Numéro de publication internationale: WO 2007/077484

(56) Documents cités:
- EP-A- 0 850 880
- WO-A-2004/016566
- US-A- 4 840 985
- US-A- 6 087 404
- US-A1- 2004 077 762
- US-A1- 2004 250 970

## Description

Le domaine technique de l'invention est constitué par les procédés de fabrication de carbonates de calcium naturel et précipité co-broyés dans l'eau.

De manière plus particulière, ce domaine est constitué des agents de co-broyage qui sont mis en oeuvre au cours de tels procédés de co-broyage dans l'eau de carbonates de calcium naturel et précipité.

Un premier objet de l'invention consiste en l'utilisation, dans un procédé de fabrication de carbonates de calcium naturel et précipité co-broyés, comprenant les étapes de :
1. préparation
   (a) d'une suspension aqueuse de carbonate de calcium naturel, comprenant éventuellement au moins un agent dispersant et / ou au moins un agent d'aide au broyage,
   (b) et d'une suspension aqueuse de carbonate de calcium précipité, comprenant éventuellement au moins un agent dispersant,
2. co-broyage desdites suspensions aqueuses de carbonates de calcium naturel et précipité, telles que préparées au cours de l'étape 1),
3. éventuellement concentration de la suspension aqueuse des carbonates de calcium naturel et précipité co-broyés, telle qu'obtenue après l'étape 2),
4. éventuellement séchage de la suspension aqueuse de carbonates de calcium naturel et précipité co-broyés, telle qu'obtenue après l'étape 2) ou 3),
d'un agent de co-broyage, caractérisé en ce que :
a) il est constitué d'au moins un homopolymère et / ou d'au moins un copolymère de l'acide acrylique, partiellement neutralisé, et dont le taux de neutralisation molaire des fonctions acides est inférieur à 75 % de la totalité des fonctions acides,
b) et en ce qu'il est introduit :
   - entre l'étape 1) et l'étape 2) dans la suspension aqueuse de carbonate de calcium naturel préparée à l'étape 1a) et / ou dans la suspension aqueuse de carbonate de calcium précipité préparée à l'étape 1b) et / ou dans le mélange de ces deux suspensions,
   - et / ou pendant l'étape 2) de co-broyage,
   - et éventuellement entre l'étape 2) et l'étape 3),
   - et éventuellement pendant l'étape 3).

Un deuxième objet de l'invention réside dans les suspensions aqueuses de carbonates de calcium naturel et précipité co-broyés, obtenues par l'opération de co-broyage de la suspension aqueuse de carbonate de calcium naturel et de la suspension aqueuse de carbonate de calcium précipité, et qui peuvent aussi être obtenues après l'étape éventuelle de concentration de la suspension aqueuse résultant de l'étape de co-broyage.

Un troisième objet de l'invention réside dans les pigments secs de carbonates de calcium naturel et précipité co-broyés puis résultant de l'opération de séchage.

Un quatrième objet de l'invention réside dans l'utilisation des suspensions aqueuses de carbonates de calcium naturel et précipité co-broyés, dans le domaine du papier, et notamment dans le couchage de papier et dans la fabrication de la feuille de papier, et de la peinture.

Un dernier objet de l'invention réside dans l'utilisation des pigments secs de carbonates de calcium naturel et précipité co-broyés puis séchés, dans le domaine du papier, et notamment dans le couchage de papier et dans la fabrication de la feuille de papier, de la peinture, des plastiques et des caoutchoucs.

Dans toute la présente Demande, la Demanderesse indique qu'un agent dispersant est utilisé dans un procédé de dispersion de matières minérales qui ne fait pas intervenir de diminution de tailles desdites matières minérales, alors qu'un agent de broyage (ou de co-broyage) est utilisé dans un procédé de broyage (ou de co-broyage) qui fait intervenir une réduction de la taille desdites matières minérales.

On parle de co-broyage (et d'agent de co-broyage) lorsque le procédé de broyage met en oeuvre au moins deux matières minérales de natures différentes, par opposition à un procédé de broyage qui consiste à broyer une seule matière minérale.

Le carbonate de calcium est utilisé depuis de nombreuses années dans les domaines du papier, du plastique, du caoutchouc ou de la peinture. Il est soit d'origine naturelle et ensuite broyé et on parle alors de carbonate de calcium naturel broyé ou de GCC selon l'expression anglaise "ground calcium carbonate", soit d'origine synthétique et on parle de carbonate de calcium précipité ou de PCC selon l'expression anglaise "precipitated calcium carbonate".

Depuis quelques années, il existe une demande pour fournir du carbonate de calcium sous forme d'une suspension aqueuse, contenant à la fois du carbonate de calcium naturel et précipité. Cette demande existe notamment dans le secteur papetier, car la présence conjointe de GCC et de PCC dans des sauces de couchages formulées à partir de suspensions aqueuses de carbonates de calcium, permet au fabricant de papier de réguler précisément certaines des propriétés finales de la feuille de papier.

Ainsi, les documents "PCC or GCC, factors determining calcium carbonate choice in alkaline conversion" (published following the November 1995 28th Pulp and Paper Annual Meeting), "GCC vs. PCC as the primary filler for uncoated and coated wood-free paper" (Tappi Journal 2000, 83(5), pp 76) ou encore "Chalk : a calcium carbonate for the high-filled sheet" (TAPPI Proceedings, April 5-8 1992, Papermakers Conférence, Book 2, Opryland Hotel, Nashville TN, TAPPI Press, pp. 515-520), mentionnent-ils l'utilisation de suspensions aqueuses de carbonates de calcium naturel et précipité pour formuler des sauces de couchage papetières. Dans le document "Coating structure with calcium carbonate pigments and its influence on paper and print gloss" (Pulp & Paper Canada, 2004, 105(9), pp. 43-46), l'influence de différents mélanges de GCC et de PCC sur les propriétés de brillance et d'imprimabilité d'une feuille de papier couchée par des sauces de couchage contenant lesdits mélanges est même discutée. En vue de fabriquer de telles suspensions aqueuses de GCC et de PCC, l'homme du métier, connaît un certain nombre de documents qui décrivent de simples mélanges entre une suspension aqueuse de carbonate de calcium naturel et une suspension aqueuse de carbonate de calcium précipité.

Ainsi, le document WO 2004 / 016 566 décrit-il une méthode pour préparer une composition pigmentaire qui consiste à mélanger dans l'eau un PCC ayant un diamètre de particules (en poids) inférieur à 1,6 µm et un GCC ayant un diamètre de particules (en poids) inférieur à 0,8 µm, dans un rapport massique GCC : PCC allant de 3 : 2 à 1 : 9. En outre, il est indiqué qu'un agent dispersant à base de polyacrylate de sodium peut être utilisé dans la préparation des suspensions aqueuses initiales de GCC et de PCC ([0018] et [0019]). Une telle composition pigmentaire est ensuite utilisée dans la fabrication de sauces de couchage qui permettent de coucher des feuilles de papier dont les propriétés de brillance et d'opacité sont améliorées.

L'homme du métier connaît aussi le document DE 4 128 570 dont l'objet consiste en une charge carbonatée, utilisable aussi bien dans les sauces de couchage que dans la charge de masse, et conduisant à des propriétés de blancheur et d'opacité améliorées. Cette charge carbonatée est caractérisée en ce que les particules qui la constituent ont une forme ronde ou rhomboédrique, en ce qu'elle présente un facteur de distribution de tailles granulométriques (rapport des diamètres moyens tels que 50 % et 20 % en poids des particules possèdent un diamètre inférieur à ce diamètre moyen) compris entre 1,1 et 1,4, en ce qu'elle présente un rapport R (% en poids de particules dont le diamètre est inférieur à 1 µm / % en poids de particules dont le diamètre est inférieur à 0,2 µm) compris entre 8 et 19, et en ce qu'elle possède un diamètre moyen compris entre 0,4 et 1,5 µm. Cette charge est à base de carbonate de calcium naturel et / ou précipité, éventuellement sous la forme d'une suspension aqueuse pouvant contenir un agent dispersant à base de polyacrylate de sodium (tel qu'indiqué colonne 6, lignes 52-55).

L'homme du métier connaît aussi le document WO 2004 / 059 079 qui décrit une composition pigmentaire, utilisable pour la fabrication de sauces de couchage papetières, et qui comprend un GCC et un PCC qui présentent tous les deux un facteur de distribution (100 x d₃₀/d₇₀, où dₓ désigne le diamètre moyen tel que x % en poids des particules ont un diamètre inférieur à ce diamètre moyen). Cette composition résulte du mélange des deux carbonates de calcium d'origine différente en milieu aqueux, la suspension aqueuse de matières minérales résultante pouvant contenir un agent dispersant ; ledit agent dispersant est choisi parmi les sels de polyacrylate (tel qu'un sel de sodium ou d'aluminium), un hexamétaphosphate de sodium, un composé polyol non ionique, l'acide phosphorique, les surfactants non ioniques, ou les alcanolamines.

Enfin, l'homme du métier connaît le document EP 1 347 835 qui décrit l'utilisation d'homopolymères ou de copolymères de l'acide acrylique comme agent dispersant ou agent de broyage de matières minérales, lesdits homopolymères ou copolymères ayant un pourcentage molaire des sites acides actifs non neutralisés compris entre 10 % et 60 % et celui des sites acides actifs neutralisés par au moins un agent de neutralisation au moins bifonctionnel compris entre 10 % et 80 %, le complément à 100 % des sites acides actifs du polymère étant neutralisé par des agents de neutralisation monofonctionnels. Ce document ne décrit que des broyages de GCC ou des dispersions de PCC : il n'enseigne donc rien à l'homme du métier sur les procédés de co-broyage de GCC et de PCC. D'autre part, il tend à résoudre un problème technique très éloigné de celui objet de la présente Demande : il s'agit en effet de diminuer la quantité d'agent de broyage ou d'agent dispersant non adsorbé aux surfaces de particules minérales en suspension aqueuse, ce qui nuit aux propriétés d'imprimabilité du papier fabriqué à partir de telles suspensions.

Par conséquent, aucun de ces 4 documents ne révèle un procédé de fabrication de carbonates de calcium naturel et précipité par co-broyage. De plus, ces 4 documents n'enseignent que l'utilisation de dispersants bien connus de l'homme du métier et décrits de manière très générale, dans un procédé de simple mélange entre une suspension aqueuse de GCC et une suspension aqueuse de PCC.

En vue de fabriquer des suspensions aqueuses de GCC et de PCC, l'homme du métier connaît aussi un certain nombre de documents qui décrivent une opération de co-broyage de carbonate de calcium naturel et de carbonate de calcium précipité.

Il connaît notamment la demande de brevet européenne non publiée n° 05 077 111 dont 1e problème technique réside dans la fourniture d'une suspension aqueuse de GCC et de PCC, en vue d'améliorer la brillance de papiers couchés par des sauces de couchage contenant lesdites suspensions. Ce document décrit un procédé de co-broyage de GCC et de PCC, conduisant à une suspension aqueuse de carbonates de calcium naturel et précipité dont au moins 80 % en poids des particules possèdent un diamètre moyen inférieur à 1 µm et dont la surface spécifique BET est inférieure à 25 m²/g.

Il connaît aussi la demande de brevet européenne non publiée n° 05 077 113 dont le procédé qu'il décrit permet d'améliorer le rendement énergétique dans la fabrication d'une suspension aqueuse de GCC et de PCC. Ce procédé repose notamment sur une étape de co-broyage du GCC et du PCC, pour conduire à une suspension aqueuse de carbonates de calcium naturel et précipité, présentant un facteur de distribution (100 x d₃₀/d₇₀, tel que défini précédemment) au moins égal à 30.

Il connaît également la demande de brevet européenne non publiée n° 05 077 112 décrivant un procédé de broyage qui, par utilisation de corps broyants particuliers à base de billes d'oxyde de zirconium stabilisé par de l'oxyde de cérium, permet de broyer des matières minérales dans des conditions de pH, de température et de pression élevées. Cette demande de brevet indique que les matières minérales en question peuvent être du carbonate de calcium naturel et précipité qui sont alors co broyés.

Ces 3 documents révèlent qu'un agent dispersant et / ou un agent d'aide au broyage peut être mis en oeuvre pendant ou après l'étape de co-broyage, dans une quantité au plus égale à 2 % en poids sec d'agent par rapport au poids sec de matières minérales. Il n'est en l'occurrence rien indiqué ni suggéré sur la nature chimique dudit agent.

Or, l'homme du métier qui souhaite utiliser un procédé de fabrication d'une suspension aqueuse de carbonates de calcium naturel et précipité mettant en oeuvre une étape de co-broyage du GCC et du PCC, se trouve confronté au triple problème technique suivant :
- il cherche à augmenter l'extrait sec de la suspension aqueuse obtenue après co-broyage, c'est-à-dire le pourcentage en poids sec de matière minérale par rapport au poids total de la suspension pour des raisons économiques : plus cet extrait sec est élevé, plus la quantité de carbonate de calcium apporté au client final est importante ; cet extrait sec doit être supérieur à 70 %, préférentiellement supérieur à 72 %, et très préférentiellement supérieur à 74%;
- il cherche à obtenir une suspension aqueuse de matière minérale après l'étape de co-broyage stable dans le temps et ce, pour des questions de stabilité de ladite suspension au stockage ; ceci se traduit par une viscosité Brookfield™ mesurée après l'étape de co-broyage (à 25 °C et à 10 tours / minute) inférieure à 5 000 mPa.s, préférentiellement inférieure à 3 000 mPa.s, très préférentiellement inférieure à 2 000 mPa.s, et une viscosité Brookfield™ mesurée 8 jours après l'étape de co-broyage et après agitation (à 25 °C et à 10 tours / minute) inférieure à 50 000 mPa.s, préférentiellement inférieure à 30 000 mPa.s, très préférentiellement inférieure à 20 000 mPa.s ;
- il cherche enfin à obtenir des particules de carbonates de calcium les plus fines possibles, car cette finesse améliore en général certaines propriétés optiques de la feuille de papier couchée telle que la brillance ; il cherche à obtenir des particules de carbonate de calcium dont le diamètre médian est inférieur 0,7 µm, préférentiellement inférieur à 0,5 µm, très préférentiellement inférieur à 0,3 µm.

Dans cette optique, aucun des documents de l'état de la technique cités jusqu'alors par la Demanderesse ne lui enseigne ni ne lui suggère une solution, puisqu'ils visent tous à résoudre des problèmes techniques différents. De plus, l'enseignement que l'homme du métier peut tirer de ces documents au niveau des agents d'aide au broyage reste très général, et ne révèle en rien l'utilisation particulière d'au moins un homopolymère et / ou d'au moins un copolymère de l'acide acrylique, partiellement neutralisé, et dont le taux de neutralisation molaire des fonctions acides est inférieur à 75 % de la totalité des fonctions acides.

Enfin, la Demanderesse connaît le document EP 0 850 880 qui décrit un procédé de fabrication de suspensions aqueuses de carbonate de calcium, présentant un extrait sec élevé, ainsi qu'une bonne stabilité. Le problème technique réel résolu par ce document est en fait d'éviter (tel que reconnu par ses auteurs, page 3, lignes 33-47) les problèmes liés à l'emploi de carbonate de calcium naturel initialement broyé en suspension aqueuse, et ensuite mélangé à du carbonate de calcium précipité dans une suspension aqueuse : ladite suspension présenterait alors une viscosité trop élevée. La solution proposée dans ce document est un procédé consistant à mélanger une suspension aqueuse de PCC contenant un agent réducteur de viscosité avec une suspension aqueuse de GCC broyé à sec, à ajouter un agent rédacteur de viscosité, et à broyer finalement la suspension obtenue. La lecture des exemples dans ce document démontre que les particules minérales de carbonate de calcium, issues de l'étape de co-broyage, sont des particules très grossières au regard de celles obtenues dans la présente invention : leur diamètre médian est compris entre 0,85 et 2,2 µm. Or, l'homme du métier, qui cherche ici à obtenir des particules de carbonate de calcium avec un diamètre moyen inférieur 0,7 µm, préférentiellement inférieur à 0,5 µm, très préférentiellement inférieur à 0,3 µm, sait qu'une telle réduction de la taille des particules minérales aura pour effet d'augmenter considérablement la viscosité des suspensions obtenues si on souhaite maintenir leur extrait sec à un degré constant ou, inversement, l'obligera à diminuer considérablement l'extrait sec de ces suspensions s'il souhaite maintenir leur viscosité constante. Un tel document ne lui enseigne donc rien, au sujet de la triple problématique évoquée plus haut et qui se pose à l'homme du métier. Enfin, la Demanderesse tient à souligner que dans le document EP 0 850 880, le seul agent réducteur de viscosité mentionné est un polyacrylate de podium, tel qu'indiqué dans l'exemple comparatif n° 1. Outre le fait qu'un tel agent ne révèle pas les caractéristiques chimiques des polymères dont l'utilisation fait l'objet de la présente invention, le terme même d'agent réducteur de viscosité indique que sa fonction est celle d'un dispersant. Or, comme on le verra notamment dans les exemples, les polymères mis en oeuvre dans la présente invention se comportent comme des agents de co-broyage.

Le document US 2004/0077762, qui vise à résoudre un problème technique très éloigné - la réduction du taux de dispersant libre dans une suspension aqueuse de carbonate de calcium- propose de mettre en oeuvre des polymères acryliques partiellement neutralisés. Il apparaît clairement que ces polymères sont mis en oeuvre dans les conditions habituelles de fabrication des pigments individuels que sont le GCC et le PCC : comme agent dispersant ou de broyage du GCC, et comme agent dispersant du PCC. On est donc très éloigné de toute notion de co-broyage.

Ainsi, l'homme du métier qui souhaite utiliser un procédé de fabrication d'une suspension aqueuse de GCC et de PCC mettant en oeuvre une étape de co-broyage du GCC et du PCC, et se trouvant confronté au triple problèmes technique suivant :
- obtenir un extrait sec supérieur à 70 %, préférentiellement supérieur à 72 %, et très préférentiellement supérieur à 74 % (en poids sec de GCC et de PCC par rapport au poids total de la suspension);
- obtenir pour cette même suspension une viscosité Brookfield™ mesurée après l'étape de co-broyage (à 25 °C et à 10 tours/minute) inférieure à 5 000 mPa.s, préférentiellement inférieure à 3 000 mPa.s, très préférentiellement inférieure à 2 000 mPa.s, et une viscosité Brookfield™ mesurée 8 jours après l'étape de co-broyage et après agitation (à 25 °C et à 10 tours / minute) inférieure à 50 000 mPa.s, préférentiellement inférieure à 30 000 mPa.s, très préférentiellement inférieure à 20 000 mPa.s ;
- obtenir, dans cette même suspension des particules de carbonate de calcium dont le diamètre médian est inférieur 0,7 µm, préférentiellement inférieur à 0,5 µm, très préférentiellement inférieur à 0,3 µm ;
a mis au point de manière tout à fait surprenante l'utilisation, dans un procédé de co-broyage de GCC et de PCC, comprenant les étapes de :
1. préparation
   (a) d'une suspension aqueuse de GCC, comprenant éventuellement au moins un agent dispersant et / ou au moins un agent d'aide au broyage,
   (b) et d'une suspension aqueuse de PCC, comprenant éventuellement au moins un agent dispersant,
2. co-broyage desdites suspensions aqueuses de carbonates de calcium naturel et précipité, telles que préparées au cours de l'étape 1),
3. éventuellement concentration de la suspension aqueuse des carbonates de calcium naturel et précipité co-broyés, telle qu'obtenue après l'étape 2),
4. éventuellement séchage de la suspension aqueuse de carbonates de calcium naturel et précipité co-broyés, telle qu'obtenue après l'étape 2) ou 3),
d'un agent de co-broyage, caractérisé en ce que :
(a) il est constitué d'au moins un homopolymère et / ou d'au moins un copolymère de l'acide acrylique, partiellement neutralisé, et dont le taux de neutralisation molaire des fonctions acides est inférieur à 75 % de la totalité des fonctions acides,
(b) et en ce qu'il est introduit :
   - entre l'étape 1) et l'étape 2), dans la suspension aqueuse de GCC préparée à l'étape 1a) et / ou dans la suspension aqueuse de PCC préparée à l'étape 1b) et / ou dans le mélange de ces deux suspensions,
   - et / ou pendant l'étape 2) de co-broyage,
   - et éventuellement entre l'étape 2) et l'étape 3),
   - et éventuellement pendant l'étape 3).

Cette utilisation d'agent de co-broyage est également caractérisée en ce qu'on met en oeuvre de 0,5 % à 2 % en poids sec dudit agent par rapport au poids sec total de GCC et de PCC.

Cette utilisation d'agent de co-broyage est également caractérisée en ce que ledit agent présente un taux de neutralisation molaire des fonctions acides inférieur à 75 %, préférentiellement inférieur à 50 % et très préférentiellement inférieur à 20 % de la totalité des fonctions acides.

Cette utilisation est également caractérisée en ce que ledit agent est neutralisé par les hydroxydes, les carbonates, les hydrogénocarbonates de sodium et de potassium, les oxydes, les hydroxydes de calcium et de magnésium, l'ammoniaque ou leurs mélanges, préférentiellement par les hydroxydes, les carbonates, les hydrogénocarbonates de sodium et de potassium, l'ammoniaque et leurs mélanges, très préférentiellement par l'hydroxyde de sodium.

Cette utilisation est également caractérisée en ce que ledit agent présente un poids moléculaire compris entre 4 000 g/mole et 15 000 g/mole, préférentiellement compris entre 4 000 g/mole et 10 000 g/mole.

Cette utilisation est également caractérisée en ce que ledit agent présente un indice de polymolécularité compris entre 1,5 et 3,5, préférentiellement entre 1,5 et 2,5.

La Demanderesse indique que dans la présente Demande, le poids moléculaire des polymères mis en oeuvre, ainsi que leur indice de polymolécularité, sont déterminés selon la méthode GPC (Chromatographie en Phase Gel ou Gel Permeability Chromatography) mettant en oeuvre un appareil de chromatographie liquide de marque Waters™ doté de deux détecteurs dont l'un combinant la diffusion dynamique de la lumière à la viscosimétrie mesurée par un viscosimètre Viscotek™ et l'autre étant un détecteur de concentration réfractométrique de marque Waters™.

Cet appareillage de chromatographie liquide est doté de colonnes d'exclusion stérique convenablement choisies par l'homme du métier afin de séparer les différents poids moléculaires des polymères étudiés.

La phase liquide d'élution est une phase aqueuse.

De manière détaillée, on prélève 1 ml de la solution de polymérisation qui est mise sur une coupelle, et ensuite évaporée à température ambiante sous un vide inférieur à 1 mm de mercure. Le soluté est dilué à 0,9 % dans l'éluant de la GPC, et l'ensemble est ensuite injecté dans l'appareil de GPC. L'éluant de la GPC est une solution de NaHCO₃ : 0,08 mol/1, NaNO₃ : 0,1 mol/1, triéthanolamine : 0,02 mol/1, NaN₃ 0,03 % massique. La colonne de GPC contient une pompe isocratique (Waters 515) dont le débit est réglé à 0,5 ml/min, un four contenant une précolonne de type "Guard Column Ultrahydrogel Waters ^{™}" une colonne linéaire de type "Ultrahydrogel Waters^{™}" de 30 cm de long et 7,8 mm de diamètre intérieur et un détecteur réfractométrique de type RI Waters^{™} 410. Le four est porté à la température de 60°C, et le réfractomètre est porté à la température de 50°C. L'appareil de GPC est étalonné par une série de 5 étalons de polyacrylate de sodium fourni par Polymer Standard Service, et d'indice de polymolécularité compris entre 1,4 et 1,7, ainsi qu'avec un polyacrylate de sodium d'indice de polymolécularité égal à 2,4 et de poids moléculaire égal à 5 600 g/mole.

Cette utilisation est également caractérisée en ce que ledit agent, lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

Cet agent de co-broyage qui est un homopolymère ou un copolymère de l'acide acrylique est obtenu par des procédés connus de polymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Cet agent de co-broyage qui est donc issu d'une réaction de polymérisation peut éventuellement être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges. Dans une variante particulière, la Demanderesse a remarqué que le choix d'agents de dispersion particuliers mis en oeuvre pour la préparation de la suspension aqueuse de PCC à l'étape 1b), permet d'améliorer avantageusement les propriétés finales de la suspension aqueuse de GCC et de PCC issue des étapes 2) et 3) et ce, en terme d'extrait sec (% en poids sec total de GCC et de PCC par rapport au poids total de la suspension), de viscosités Brookfield™ mesurées après l'étape de co-broyage et après 8 jours après agitation (à 25 °C et à 10 tours / minute), et de diamètre médian des particules de GCC et de PCC.

Plus précisément, ceci signifie que, dans cette variante particulière, on parvient à améliorer au moins un des paramètres cités dans le paragraphe ci-dessus, tout en maintenant les autres constants.

Aussi, selon cette variante particulière, l'utilisation d'agents de co-broyage selon l'invention est caractérisée en ce que la suspension aqueuse de PCC préparée au cours de l'étape 1b), contient au moins un agent dispersant du PCC qui est un homopolymère et / ou un copolymère de l'acide acrylique, réunissant toutes les caractéristiques suivantes :
- il présente un taux de neutralisation molaire des fonctions acides supérieur à 80 %, préférentiellement supérieur à 90 % de la totalité des fonctions acides, et il est très préférentiellement totalement neutralisé ;
- il présente un poids moléculaire compris entre 10 000 g/mole et 15 000 g/mole, préférentiellement entre 12 000 g/mole et 14 000 g/mole ;
- il présente un indice de polymolécularité compris entre 1,5 et 2,5.

Selon cette variante, l'utilisation d'agents de co-broyage selon l'invention est aussi caractérisée en ce qu'on met en oeuvre, dans la suspension aqueuse de PCC préparée à l'étape 1b), de 0,5 % à 2 %, préférentiellement de 0,5 % à 1 % en poids sec dudit agent de dispersion du PCC, par rapport au poids sec de PCC.

Selon cette variante, ledit agent dispersant mis en oeuvre dans la suspension de PCC préparée à l'étape 1b), est neutralisé par les hydroxydes, les carbonates, les hydrogénocarbonates de sodium, de potassium, l'ammoniaque ou leurs mélanges, et préférentiellement par l'hydroxyde de sodium.
Selon cette variante, ledit agent dispersant mis en oeuvre dans la suspension de PCC préparée à l'étape 1b), lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

Cet agent de dispersion du PCC qui est un homopolymère ou un copolymère de l'acide acrylique est obtenu par des procédés connus de polymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Réversible Addition Fragmentation Transfer (RAFT), la méthode dénommée Atom Transfer Radical Polymerization (ATRP), 1a méthode dénommée Nitroxide Mediated Polymerization (NMP) ou encore la méthode dénommée Cobaloxime Mediated Free Radical Polymerization.

Cet agent de dispersion qui est donc issu d'une réaction de polymérisation peut éventuellement être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

Un deuxième objet de l'invention réside dans les suspensions aqueuses de GCC et de PCC co-broyés, caractérisées en ce qu'elles contiennent au moins un agent de co-broyage qui est constitué d'au moins un homopolymère et / ou d'au moins un copolymère de l'acide acrylique, partiellement neutralisé, et dont le taux de neutralisation molaire des fonctions acides est inférieur à 75 % de la totalité des fonctions acides.

Ces suspensions aqueuses de GCC et de PCC co-broyés sont aussi caractérisées en ce qu'elles contiennent de 0,5 % à 2 % en poids sec dudit agent de co-broyage par rapport au poids sec total de GCC et de PCC.

Ces suspensions aqueuses de GCC et de PCC co-broyés sont aussi caractérisées en ce que ledit agent de co-broyage présente un taux de neutralisation molaire des fonctions acides inférieur à 75 %, préférentiellement inférieur à 50 %, très préférentiellement inférieur à 20 % de la totalité des fonctions acides.

Ces suspensions aqueuses de GCC et de PCC co-broyés sont aussi caractérisées en ce que ledit agent de co-broyage est neutralisé par les hydroxydes, les carbonates, les hydrogénocarbonates de sodium et de potassium, les oxydes, les hydroxydes de calcium et de magnésium, l'ammoniaque ou leurs mélanges, préférentiellement par les hydroxydes, les carbonates, les hydrogénocarbonates de sodium et de potassium, l'ammoniaque et leurs mélanges, très préférentiellement par l'hydroxyde de sodium.

Ces suspensions aqueuses de GCC et de PCC co-broyés sont aussi caractérisées en ce que ledit agent de co-broyage présente un poids moléculaire compris entre 4 000 g/mole et 15 000 g/mole, préférentiellement entre 4 000 g/mole et 10 000 g/mole.

Ces suspensions aqueuses de GCC et de PCC co-broyés sont aussi caractérisées en ce que ledit agent de co-broyage présente un indice de polymolécularité compris entre 1,5 et 3,5, préférentiellement entre 1,5 et 2,5.

Ces suspensions aqueuses de GCC et de PCC co-broyés sont aussi caractérisées en ce que ledit agent de co-broyage, lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

Cet agent de co-broyage qui est un homopolymère ou un copolymère de l'acide acrylique est obtenu par des procédés connus de copolymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Cet agent de co-broyage qui est donc issu d'une réaction de polymérisation peut éventuellement être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

Ces suspensions aqueuses de GCC et de PCC co-broyés sont aussi caractérisées en ce qu'elles contiennent un pourcentage en poids sec de PCC par rapport au poids sec total de GCC et de PCC, compris entre 10 % et 90 %, préférentiellement entre 20 % et 80 %, très préférentiellement entre 30 % et 70 %.

Ces suspensions aqueuses de GCC et de PCC co-broyés sont aussi caractérisées en ce qu'elles contiennent un pourcentage en poids sec total de PCC et de GCC, par rapport au poids total de la suspension, supérieur à 70 %, préférentiellement supérieur à 72 %, très préférentiellement supérieur à 74 %.

Cependant tout moyen permettant d'aboutir à des suspensions aqueuses de GCC et de PCC co-broyés contenant ledit agent de co-broyage et ayant un pourcentage en poids sec total de GCC et de PCC inférieur à 70 % du poids total de la suspension, doit être considéré comme un équivalent technique.

Ces suspensions aqueuses de GCC et de PCC co-broyés sont aussi caractérisées en ce que les particules de GCC et de PCC qu'elles contiennent présentent un facteur de distribution (100 x d₃₀/d₇₀, où dₓ désigne le diamètre moyen tel que x % en poids des particules ont un diamètre inférieur à ce diamètre moyen) supérieur à 30, préférentiellement supérieur à 40, très préférentiellement supérieur à 45.

Ces suspensions aqueuses de GCC et de PCC co-broyés sont aussi caractérisées en ce que les particules de GCC et de PCC qu'elles contiennent présentent un diamètre médian inférieur à 0,7 µm, préférentiellement inférieur à 0,5 µm, très préférentiellement inférieur à 0,3 µm.

La Demanderesse indique que les valeurs de de et du diamètre médian sont déterminées à partir d'un appareil du type Sedigraph™ 5100 commercialisé par la société MICROMERITICS™, par les méthodes bien connues de l'homme du métier. Dans une variante particulière, ces suspensions aqueuses de GCC et de PCC co-broyés sont aussi caractérisées en ce qu'elles contiennent aussi au moins un agent dispersant du PCC qui est un homopolymère et / ou un copolymère de l'acide acrylique, réunissant toutes les caractéristiques suivantes :
- il présente un taux de neutralisation molaire des fonctions acides supérieur à 80 %, préférentiellement supérieur à 90 % de la totalité des fonctions acides, et est très préférentiellement totalement neutralisé ;
- il présente un poids moléculaire compris entre 10 000 g/mole et 15 000 g/mole, préférentiellement entre 12 000 g/mole et 14 000 g/mole ;
- il présente un indice de polymolécularité compris entre 1,5 et 2,5.

Selon cette variante, ces suspensions aqueuses de GCC et de PCC co-broyés sont aussi caractérisées en ce qu'elles contiennent de 0,5 % à 2 %, préférentiellement de 0,5 % à 1 % en poids sec dudit agent dispersant du PCC par rapport au poids sec de PCC.

Selon cette variante, ledit agent de dispersion du PCC est neutralisé par les hydroxydes, les carbonates, les hydrogénocarbonates de sodium, de potassium, l'ammoniaque ou leurs mélanges, et préférentiellement par l'hydroxyde de sodium.

Selon cette variante, ces suspensions aqueuses de GCC et de PCC co-broyés sont aussi caractérisées en ce que l'agent de dispersion du PCC , lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

Cet agent de dispersion qui est un homopolymère ou un copolymère de l'acide acrylique est obtenu par des procédés connus de copolymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Cet agent de dispersion qui est donc issu d'une réaction de polymérisation peut éventuellement être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

Un troisième objet de l'invention réside dans les pigments secs de GCC et de PCC obtenus par la variante du procédé selon l'invention qui met en oeuvre une étape de séchage des suspensions aqueuses de GCC et de PCC co-broyés.

La Demanderesse indique qu'au cours de cette étape, l'homme du métier pourra mettre en oeuvre un agent de traitement de la surface des particules de GCC et de PCC co-broyés, tel que notamment un agent pour rendre ladite surface hydrophobe, un agent tel qu'un acide gras ayant de 8 à 30 atomes de carbone, cet agent pouvant être notamment l'acide stéarique.

Ces pigments secs de GCC et de PCC co-broyés sont aussi caractérisés en ce qu'ils contiennent un pourcentage en poids sec de PCC par rapport au poids sec total de GCC et de PCC, compris entre 10 % et 90 %, préférentiellement entre 20 % et 80 %, très préférentiellement entre 30 % et 70 %.

Ces pigments secs sont aussi caractérisés en ce qu'ils contiennent au moins un agent de co-broyage du GCC et du PCC qui est au moins un homopolymère et / ou au moins un copolymère de l'acide acrylique, partiellement neutralisé, et dont le taux de neutralisation molaire des fonctions acides est inférieur à 75 % de la totalité des fonctions acides.

Ces pigments secs sont aussi caractérisés en ce qu'ils contiennent de 0,5 % à 2 % en poids sec dudit agent de co-broyage du GCC et du PCC par rapport au poids sec total de GCC et de PCC.

Ces pigments secs sont aussi caractérisés en ce que l'agent de co-broyage du GCC et du PCC présente un taux de neutralisation molaire des fonctions acides inférieur à 75 %, préférentiellement inférieur à 50 %, très préférentiellement inférieur à 20 % de la totalité des fonctions acides.

Ces pigments secs sont aussi caractérisés en ce que l'agent de co-broyage du GCC et du PCC est neutralisé par les hydroxydes, les carbonates, les hydrogénocarbonates de sodium et de potassium, les oxydes, les hydroxydes de calcium et de magnésium, l'ammoniaque ou leurs mélanges, préférentiellement par les hydroxydes, les carbonates, les hydrogénocarbonates de sodium et de potassium, l'ammoniaque et leurs mélanges, très préférentiellement par l'hydroxyde de sodium.

Ces pigments secs sont aussi caractérisés en ce que l'agent de co-broyage du GCC et du PCC présente un poids moléculaire compris entre 4 000 g/mole et 15 000 g/mole, préférentiellement entre 4 000 g/mole et 10 000 g/mole.

Ces pigments secs sont aussi caractérisés en ce que l'agent de co-broyage du GCC et du PCC présente un indice de polymolécularité compris entre 1,5 et 3,5, préférentiellement entre 1,5 et 2,5.

Ces pigments secs sont aussi caractérisés en ce que l'agent de co-broyage du GCC et du PCC, lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

Dans une variante particulière, ces pigments secs sont aussi caractérisés en ce qu'ils contiennent aussi au moins un agent dispersant du PCC qui est un homopolymère et / ou un copolymère de l'acide acrylique, réunissant toutes les caractéristiques suivantes :
- il présente un taux de neutralisation molaire des fonctions acides supérieur à 80 %, préférentiellement supérieur à 90 % de la totalité des fonctions acides, et est très préférentiellement totalement neutralisé ;
- il présente un poids moléculaire compris entre 10 000 g/mole et 15 000 g/mole, préférentiellement entre 12 000 g/mole et 14 000 g/mole ;
- il présente un indice de polymolécularité compris entre 1,5 et 2,5.

Selon cette variante, ces pigments secs de GCC et de PCC sont aussi caractérisés en ce qu'ils contiennent de 0,5 % à 2 %, préférentiellement de 0,5 % à 1 % en poids sec dudit agent dispersant du PCC par rapport au poids sec de PCC.

Selon cette variante, ledit agent de dispersion du PCC est neutralisé par les hydroxydes, les carbonates, les hydrogénocarbonates de sodium, de potassium, l'ammoniaque ou leurs mélanges, et préférentiellement par l'hydroxyde de sodium.

Selon cette variante, ces pigments secs de GCC et de PCC sont aussi caractérisés en ce que l'agent de dispersion du PCC, lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

Un quatrième objet de l'invention réside dans l'utilisation des suspensions aqueuses de GCC et de PCC co-broyés selon l'invention, dans la fabrication du papier et notamment dans le couchage de la feuille de papier et dans la fabrication de la feuille de papier, et dans la fabrication de peintures.

Un cinquième et dernier objet de l'invention réside dans l'utilisation des pigments secs de GCC et de PCC co-broyés et séchés selon l'invention, dans la fabrication du papier et notamment dans le couchage de la feuille de papier et dans la fabrication de la feuille de papier, dans la fabrication de peintures, de caoutchoucs et de plastiques.

### EXEMPLES

Dans chacun des exemples, les caractéristiques granulométriques des suspensions aqueuses de matières minérales sont déterminées à partir d'un appareil du type Sedigraph™ 5100 commercialisé par la société MICROMERITICS™.

### Exemple 1

Cet exemple illustre l'utilisation, dans le procédé de fabrication de GCC et de PCC co-broyés comprenant les étapes de :
1. préparation
   (a) d'une suspension aqueuse de GCC, avec un agent d'aide au broyage,
   (b) et d'une suspension aqueuse de PCC, comprenant un agent dispersant,
2. co-broyage desdites suspensions aqueuses de GCC et de PCC, telles que préparées au cours de l'étape 1),
3. concentration de la suspension aqueuse de GCC et de PCC co-broyés, telle qu'obtenue après l'étape 2),
d'un agent de co-broyage selon l'art antérieur ou d'un agent de co-broyage selon l'invention, le même agent étant introduit en partie pendant l'étape 2), l'autre partie étant introduite pendant l'étape 3).

Cet exemple illustre le cas d'un rapport en poids sec GCC : PCC pendant l'étape de co-broyage égal à 50 : 50.

De plus, cet exemple illustre également les suspensions aqueuses de GCC et de PCC co-broyés selon l'invention.

Selon l'étape 1a) dudit procédé, on commence par préparer une suspension aqueuse de GCC selon les méthodes bien connues de l'homme du métier, en utilisant 0,27 % en poids sec d'un polyacrylate par rapport au poids sec de GCC.

Cette suspension :
- possède un extrait sec égal 75,3 % (exprimé en pourcentage en poids sec de GCC par rapport au poids total de la suspension) ;
- présente des caractéristiques granulométriques telles que 41,9 % en poids des particules de GCC ont un diamètre inférieur à 1 µm, 66,2 % en poids des particules de GCC ont un diamètre inférieur à 2 µm, et telles que le diamètre médian desdites particules de GCC est égal à 1,4 µm.

Selon l'étape 1b) dudit procédé, on prépare également une suspension aqueuse de PCC selon les méthodes bien connues de l'homme du métier.

Cette suspension:
- possède un extrait sec égal 51,8 % (exprimé en pourcentage en poids sec de PCC par rapport au poids total de la suspension) ;
- présente des caractéristiques granulométriques telles que 74,5 % en poids des particules de PCC ont un diamètre inférieur à 1 µm, 96,6 % en poids des particules de PCC ont un diamètre inférieur à 2 µm, et telles que le diamètre médian desdites particules de PCC est égal à 0,71 µm ;
- et contient 0,5 % en poids sec (par rapport au poids sec de PCC) d'un agent dispersant qui est un homopolyinère de l'acide acrylique, totalement neutralisé par la soude, de poids moléculaire égal à 10 000 g/mole, et d'indice de polymolécularité égal à 3,1 ; cet agent ne correspond donc pas à la variante particulière de l'invention où des agents dispersants particulièrement avantageux sont mis en oeuvre pour disperser le PCC (la définition de tels agents ayant été donnée dans la description de la présente Demande).

Selon l'étape 2) dudit procédé, on co-broye ensuite les deux suspensions.
Le rapport en poids sec GCC : PCC pendant cette étape est égal à 50 : 50.
On introduit pendant cette étape une quantité d'agent de co-broyage égale à 0,4 % en poids sec par rapport au poids sec total de GCC et de PCC.

Selon l'étape 3) dudit procédé, on concentre la suspension aqueuse de GCC et de PCC co-broyés obtenue après l'étape 2), en introduisant le même agent que celui mis en oeuvre au cours de l'étape de co-broyage ; la quantité dudit agent mise en oeuvre au cours de l'étape de concentration est égale à 0,4 % en poids sec par rapport au poids sec total de GCC et de PCC.

### Essai n° 1

Cet essai illustre l'art antérieur.
Il met en oeuvre un agent de co-broyage qui est un homopolymère de l'acide acrylique, totalement neutralisé par l'hydroxyde de sodium, de poids moléculaire égal à 10 000 g/mole et d'indice de polymolécularité égal à 3,1.

### Essai n° 2

Cet essai illustre l'art antérieur.
Il met en oeuvre un agent de co-broyage qui est un homopolymère de l'acide acrylique, dont 80 % en mole des fonctions acides sont neutralisées par l'hydroxyde de sodium, de poids moléculaire égal à 10 000 g/mole et d'indice de polymolécularité égal à 3,1.

### Essai n° 3

Cet essai illustre l'art antérieur.
Il met en oeuvre un agent de co-broyage qui est un homopolymère de l'acide acrylique, dont 40 % en mole des fonctions acides sont neutralisées par l'hydroxyde de sodium et 45 % en mole des fonctions acides sont neutralisées par l'hydroxyde de calcium, de poids moléculaire égal à 5 600 g/mole et d'indice de polymolécularité égal à 2,4.

### Essai n° 4

Cet essai illustre l'art antérieur.
Il met en oeuvre un agent de co-broyage qui est un homopolymère de l'acide acrylique, dont 50 % en mole des fonctions acides sont neutralisées par l'hydroxyde de sodium et 35 % en mole des fonctions acides sont neutralisées par l'hydroxyde de magnésium, de poids moléculaire égal à 5 600 g/mole et d'indice de polymolécularité égal à 2,2.

### Essai n° 5

Cet essai illustre l'invention.
Il met en oeuvre un agent de co-broyage qui est un homopolymère de l'acide acrylique, dont 14 % en mole des fonctions acides sont neutralisées par l'hydroxyde de sodium, de poids moléculaire égal à 5 600 g/mole et d'indice de polymolécularité égal à 2,4.

### Essai n° 6

Cet essai illustre l'invention.
Il met en oeuvre un agent de co-broyage qui est un homopolymère de l'acide acrylique, dont 40 % en mole des fonctions acides sont neutralisées par l'hydroxyde de sodium et 10 % en mole des fonctions acides sont neutralisées par l'hydroxyde de calcium, de poids moléculaire égal à 5 600 g/mole et d'indice de polymolécularité égal à 2,4.

### Essai n° 7

Cet essai illustre l'invention.
Il met en oeuvre un agent de co-broyage qui est un copolymère de l'acide acrylique et de l'acide 2-acrylamido-2-méthyl-propane-sulfonique (dans un rapport massique de ces deux constituants égal à 85 : 15), dont 30 % en mole des fonctions acides sont neutralisées par l'hydroxyde de sodium et 20 % en mole des fonctions acides sont neutralisées par l'hydroxyde de calcium, de poids moléculaire égal à 5 600 et d'indice de polymolécularité égal à 2,35.

### Essai n° 8

Cet essai illustre l'invention.
Il met en oeuvre un agent de co-broyage qui est un homopolymère de l'acide acrylique, dont 37 % en mole des fonctions acides sont neutralisées par l'hydroxyde de sodium, de poids moléculaire égal à 5 600 et d'indice de polymolécularité égal à 2,2.

Pour chacun des essais n° 1 à 8, on mesure ensuite, selon les méthodes bien connues de l'homme du métier :
- le pourcentage en poids de particules de GCC et de PCC dans la suspension finale obtenue après l'étape 3), qui ont un diamètre inférieur à 1 µm, noté % < 1 µm ;
- le diamètre médian des particules de GCC et de PCC dans la suspension finale obtenue après l'étape 3), noté dso ;
- l'extrait sec de la suspension finale obtenue après l'étape 3) noté ES ;
- les viscosités Brookfield™, mesurées à 10 tours par minute et à 25 °C selon les méthodes bien connues de l'homme du métier, de la suspension finale obtenue après l'étape 3), à l'instant t=0 et notée V_{B} (t₀), et à l'instant t=8 jours après agitation notée V_{B} (t₈).

L'ensemble de ces résultats, ainsi que les caractéristiques principales des agents de co-broyage utilisés, sont reportées dans le tableau 1.

**Tableau 1 :**

| essai n° | | 1 | 2 | 3 | 4 | 5 | 6 | 7 | 8 |
|---|---|---|---|---|---|---|---|---|---|
| art antérieur (AA) / invention (INV) | | AA | AA | AA | AA | INV | INV | INV | INV |
| agent de co-broyage utilisé pendant les étapes 2) et 3) | nature | aa | aa | aa | aa | aa | aa | aa / amps | aa |
| | neutralisation | | | 40 Na | 50 Na | | 40 Na | 30 Na | |
| | | 100 Na | 80 Na | 45 Ca | 35 Mg | 14 Na | 10 Ca | 20 Ca | 37 Na |
| | M_{w} (g/mole) | 10 000 | 10 000 | 5600 | 5600 | 5600 | 5600 | 5600 | 5600 |
| | Iₚ | 3,1 | 3,1 | 2,4 | 2,2 | 2,4 | 2,4 | 2,35 | 2,2 |
| suspension de GCC et de PCC obtenue après l'étape 3) | % < 1 µm | 90 | 92 | 98,9 | 98 | 97,9 | 97,9 | 96,1 | 97,9 |
| | d50 (µm) | 0,5 | 0,4 | 0,28 | 0,3 | 0,293 | 0,282 | 0,28 | 0,29 |
| | ES (%) | 70,0 | 71,0 | 72,0 | 73,0 | 74,4 | 73,5 | 74,0 | 74,4 |
| | V_{B} (t₀) (mPa.s) | 7 000 | 6 000 | 6 700 | 18 600 | 4 260 | 3 800 | 4 240 | 3 460 |
| | V_{B} (t₈) (mPa.s) | 100 000 | 80 000 | 65 000 | 80 000 | 46 200 | 47500 | 40 000 | 20 700 |

caractéristiques des agents de co-broyage utilisés, avec :
- "nature" désignant la nature chimique dudit agent, et notamment aa désignant un homopolymère de l'acide acrylique et aa / amps désignant un copolymère de l'acide acrylique et de l'acide 2-acrylamido-2-méthyl-propane-sulfonique dans un rapport massique de ces deux constituants égal à 85 : 15 ;
- "neutralisation" indiquant le pourcentage molaire de fonctions acides neutralisées (nombre) et la nature de l'ion de neutralisation (symbole chimique suivant le nombre) ;
- "M_{w}" désignant le poids moléculaire en masse dudit agent ;
- "Ip" désignant l'indice de polymolécularité dudit agent ;
caractéristiques des suspensions aqueuses de GCC et de PCC obtenues après l'étape de concentration, avec :
- "% < 1 µm" désignant le pourcentage en poids de particules de GCC et de PCC ayant un diamètre inférieur à 1 µm ;
- "d₅₀ "désignant le diamètre médian des particules de GCC et de PCC ;
- "ES (%)" désignant l'extrait sec de la suspension (en % en poids sec total de GCC et de PCC par rapport au poids total de la suspension) ;
- "V_{B} (t₀) " et "V_{B} (t₈) " désignant respectivement les viscosités Brookfield™, mesurées à 10 tours par minute et à 25 °C, à l'instant t=0 et à l'instant t=8 jours après agitation.

Ces résultats démontrent donc que seuls les agents de co-broyage de l'invention permettent de résoudre le problème technique qui se pose à l'homme du métier, à savoir :
- obtenir pour la suspension finale de GCC et de PCC co-broyés un extrait sec supérieur à 70 %, préférentiellement supérieur à 72 %, et très préférentiellement supérieur à 74 % (en poids sec de particules minérales par rapport au poids total de la suspension) ;
- obtenir pour cette même suspension une viscosité Brookfield™ mesurée après l'étape de co-broyage (à 25 °C et à 10 tours / minute) inférieure à 5 000 mPa.s, préférentiellement inférieure à 3 000 mPa.s, très préférentiellement inférieure à 2 000 mPa.s, et une viscosité Brookfield™ mesurée 8 jours après l'étape de co-broyage et après agitation (à 25 °C et à 10 tours / minute) inférieure à 50 000 mPa.s, préférentiellement inférieure à 30 000 mPa.s, très préférentiellement inférieure à 20 000 mPa.s ;
- obtenir, dans cette même suspension des particules de carbonates de calcium dont le diamètre médian est inférieur 0,7 µm, préférentiellement inférieur à 0,5 µm, très préférentiellement inférieur à 0,3 µm.

### Exemple 2

Cet exemple illustre l'utilisation, dans le procédé de fabrication de GCC et de PCC co-broyés comprenant les étapes de :
1. préparation
   (a) d'une suspension aqueuse de GCC, avec un agent d'aide au broyage,
   (b) et d'une suspension aqueuse de PCC, comprenant un agent dispersant,
2. co-broyage desdites suspensions aqueuses de GCC et de PCC, telles que préparées au cours de l'étape 1),
3. concentration de la suspension aqueuse de GCC et de PCC co-broyés, telle qu'obtenue après l'étape 2),
d'un agent de co-broyage selon l'art antérieur ou d'un agent de co-broyage selon l'invention, le même agent étant introduit en partie pendant l'étape 2), l'autre partie étant introduite pendant l'étape 3).

Cet exemple illustre le cas d'un rapport en poids sec GCC : PCC pendant l'étape de co-broyage égal à 70 : 30.
De plus, cet exemple illustre également les suspensions aqueuses de GCC et de PCC co-broyés selon l'invention.

Selon l'étape 1a) dudit procédé, on commence par préparer une suspension aqueuse de GCC selon les méthodes bien connues de l'homme du métier, en utilisant 0,27 % en poids sec d'un polyacrylate par rapport au poids sec de GCC.

Cette suspension :
- possède un extrait sec égal 75,3 % (exprimé en pourcentage en poids sec de GCC par rapport au poids total de la suspension) ;
- présente des caractéristiques granulométriques telles que 41,9 % en poids des particules de GCC ont un diamètre inférieur à 1 µm, 66,2 % en poids des particules de GCC ont un diamètre inférieur à 2 µm, et telles que le diamètre médian desdites particules de GCC est égal à 1,4 µm.

Selon l'étape 1b) dudit procédé, on prépare également une suspension aqueuse de PCC selon les méthodes bien connues de l'homme du métier.

Cette suspension:
- possède un extrait sec égal 51,8 % (exprimé en pourcentage en poids sec des particules de PCC par rapport au poids total de la suspension) ;
- présente des caractéristiques granulométriques telles que 74,5 % en poids des particules de PCC ont un diamètre moyen inférieur à 1 µm, 96,6 % en poids des particules de PCC ont un diamètre moyen inférieur à 2 µm, et telles que le diamètre médian desdites particules de PCC est égal à 0,71 µm ;
- et contient 0,5 % en poids sec (par rapport au poids sec de PCC) d'un agent dispersant qui est un homopolymère de l'acide acrylique, totalement neutralisé par la soude, de poids moléculaire égal à 10 000 g/mole, et d'indice de polymolécularité égal à 3,1 ; cet agent ne correspond donc pas à la variante particulière de l'invention où des agents dispersants particulièrement avantageux sont mis en oeuvre pour disperser le PCC (la définition de tels agents ayant été donnée dans la description de la présente Demande).

Selon l'étape 2) dudit procédé, on co-broye ensuite les deux suspensions.
Le rapport en poids sec GCC : PCC pendant cette étape est égal à 70 : 30.
On introduit pendant cette étape une quantité d'agent de co-broyage égale à 0,4 % en poids sec par rapport au poids sec total de GCC et de PCC mis en oeuvre.

Selon l'étape 3) dudit procédé, on concentre la suspension aqueuse de GCC et de PCC co-broyés obtenue après l'étape 2), en introduisant le même agent que celui mis en oeuvre au cours de l'étape de co-broyage ; la quantité dudit agent mise en oeuvre au cours de l'étape de concentration est égale à 0,4 % en poids sec par rapport au poids sec total de GCC et de PCC.

### Essai n° 9

Cet essai illustre l'art antérieur.
Il met en oeuvre un agent de co-broyage qui est un homopolymère de l'acide acrylique, totalement neutralisé par l'hydroxyde de sodium, de poids moléculaire égal à 10 000 g/mole et d'indice de polymolécularité égal à 3,1.

### Essai n° 10

Cet essai illustre l'art antérieur.
Il met en oeuvre un agent de co-broyage qui est un homopolymère de l'acide acrylique, dont 80 % en mole des fonctions acides sont neutralisées par l'hydroxyde de sodium, de poids moléculaire égal à 10 000 g/mole et d'indice de polymolécularité égal à 3,1.

### Essai n° 11

Cet essai illustre l'invention.

Il met en oeuvre un agent de co-broyage qui est un homopolymère de l'acide acrylique, dont 40 % en mole des fonctions acides sont neutralisées par l'hydroxyde de sodium et 10 % en mole des fonctions acides sont neutralisées par l'hydroxyde de calcium, de poids moléculaire égal à 5 600 g/mole et d'indice de polymolécularité égal à 2,4.

Pour chacun des essais n° 9 à 11, on mesure ensuite, selon les méthodes bien connues de l'homme du métier :
- le pourcentage en poids de particules de GCC et de PCC dans la suspension finale obtenue après l'étape 3), qui ont un diamètre inférieur à 1 µm, noté % < 1 µm ;
- le diamètre médian des particules de GCC et de PCC dans la suspension finale obtenue après l'étape 3), noté d₅₀ ;
- l'extrait sec de la suspension finale obtenue après l'étape 3) noté ES ;
- les viscosités Brookfield™, mesurées à 10 tours par minute et à 25 °C, de la suspension finale obtenue après l'étape 3), à l'instant t=0 et notée V_{B} (t₀), et à l'instant t=8 jours après agitation notée V_{B} (t₈).

L'ensemble de ces résultats, ainsi que les caractéristiques principales des agents de co-broyage utilisés, sont reportées dans le tableau 2.

**Tableau 2 :**

| essai n° | | 9 | 10 | 11 |
|---|---|---|---|---|
| art antérieur (AA) / invention (INV) | | AA | AA | INV |
| agent de co-broyage utilisé pendant les étapes 2) et 3) | nature | aa | aa | aa |
| | neutralisation | | | 40 Na |
| | | 100 Na | 80 Na | 10 Ca |
| | M_{w} (g/mole) | 10 000 | 5600 | 5600 |
| | Ip | 3,1 | 2,4 | 2,4 |
| suspension de GCC et de PCC obtenue après l'étape 3) | %<1µm | 90 | 98,9 | 97,9 |
| | d₅₀ (µm) | 0,5 | 0,28 | 0,282 |
| | ES (%) | 70,0 | 72,0 | 74,1 |
| | V_{B} (t₀) (mPa.s) | 6 500 | 6 200 | 3 200 |
| | V_{B} (t₈) (mPa.s) | 80 000 | 55 000 | 35 800 |

caractéristiques des agents de co-broyage utilisés, avec :
- "nature" désignant la nature chimique dudit agent, aa désignant un homopolymère de l'acide acrylique ;
- "neutralisation" indiquant 1e pourcentage molaire de fonctions acides neutralisées (nombre) et la nature de l'ion de neutralisation (symbole chimique suivant le nombre) ;
- "M_{w}" désignant le poids moléculaire en masse dudit agent ;
- "Ip" désignant l'indice de polymolécularité dudit agent ;
caractéristiques des suspensions aqueuses de carbonates de calcium naturel et précipité obtenues après l'étape de concentration, avec :
- "% < 1 µm" désignant le pourcentage en poids de particules de GCC et de PCC ayant un diamètre inférieur à 1 µm ;
- "d₅₀ "désignant le diamètre médian des particules de GCC et de PCC ;
- "ES (%)" désignant l'extrait sec de la suspension (en % en poids sec total de GCC et de PCC par rapport au poids total de la suspension) ;
- "V_{B} (t₀) " et "V_{B} (t₈) " désignant respectivement les viscosités Brookfield™, mesurées à 10 tours par minute et à 25 °C, à l'instant t=0 et à l'instant t=8 jours après agitation.

Ces résultats démontrent donc que seuls les agents de co-broyage de l'invention permettent de résoudre le problème technique qui se pose à l'homme du métier, à savoir :
- obtenir pour la suspension finale de GCC et de PCC co-broyés un extrait sec supérieur à 70 %, préférentiellement supérieur à 72 %, et très préférentiellement supérieur à 74 % (en poids sec total de GCC et de PCC par rapport au poids total de la suspension) ;
- obtenir pour cette même suspension une viscosité Brookfield™ mesurée après l'étape de co-broyage (à 25 °C et à 10 tours / minute) inférieure à 5 000 mPa.s, préférentiellement inférieure à 3 000 mPa.s, très préférentiellement inférieure à 2 000 mPa.s, et une viscosité Brookfield™ mesurée 8 jours après l'étape de co-broyage et après agitation (à 25 °C et à 10 tours / minute) inférieure à 50 000 mPa.s, préférentiellement inférieure à 30000 mPa.s, très préférentiellement inférieure à 20 000 mPa.s ;
- obtenir, dans cette même suspension des particules de carbonate de calcium dont le diamètre médian est inférieur 0,7 µm, préférentiellement inférieur à 0,5 µm, très préférentiellement inférieur à 0,3 µm.

### Exemple 3

Cet exemple illustre l'utilisation, dans le procédé de fabrication de GCC et de PCC co-broyés comprenant les étapes de :
1. préparation
   (a) d'une suspension aqueuse de GCC, avec un agent d'aide au broyage,
   (b) et d'une suspension aqueuse de PCC, comprenant un agent dispersant,
2. co-broyage desdites suspensions aqueuses de GCC et de PCC, telles que préparées au cours de l'étape 1),
3. concentration de la suspension aqueuse des carbonates de calcium naturel et précipité co broyés, telle qu'obtenue après l'étape 2),
d'un agent de co-broyage selon l'invention, le même agent étant introduit en partie pendant l'étape 2), l'autre partie étant introduite pendant l'étape 3).
Cet exemple illustre le cas d'un rapport en poids sec GCC : PCC pendant l'étape de co-broyage égal à 50 : 50.

Dans le cas des essais 15 et 16 ainsi que 17 et 18, cet exemple illustre la variante préférentielle qui réside en l'utilisation, au cours de l'étape 1b) de préparation de la suspension de PCC, d'agents dispersants du PCC qui sont des homopolymères de l'acide acrylique, réunissant toutes les caractéristiques suivantes :
- un taux de neutralisation molaire des fonctions acides supérieur à 80 %, préférentiellement supérieur à 90 % de la totalité des fonctions acides, et ledit agent est très préférentiellement totalement neutralisé ;
- un poids moléculaire compris entre 10 000 g/mole et 15 000 g/mole, préférentiellement entre 12 000 g/mole et 14 000 g/mole ;
- un indice de polymolécularité compris entre 1,5 et 2,5.

Enfin, cet exemple illustre également les suspensions aqueuses de GCC et de PCC co-broyés selon l'invention.

Selon l'étape 1a) dudit procédé, on commence par préparer une suspension aqueuse de GCC selon les méthodes bien connues de l'homme du métier, en utilisant 0,27 % en poids sec d'un polyacrylate par rapport au poids sec de GCC.

Cette suspension:
- possède un extrait sec égal 75,3 % (exprimé en pourcentage en poids sec de GCC par rapport au poids total de la suspension) ;
- présente des caractéristiques granulométriques telles que 41,9 % en poids des particules de GCC ont un diamètre inférieur à 1 µm, 66,2 % en poids des particules de GCC ont un diamètre inférieur à 2 µm, et telles que le diamètre médian desdites particules de GCC est égal à 1,4 µm.

Selon l'étape 1b) dudit procédé, on prépare également une suspension aqueuse de PCC selon les méthodes bien connues de l'homme du métier.

Cette suspension :
- possède un extrait sec égal 51,8 % (exprimé en pourcentage en poids sec de PCC par rapport au poids total de la suspension) ;
- présente des caractéristiques granulométriques telles que 74,5 % en poids des particules de PCC ont un diamètre inférieur à 1 µm, 96,6 % en poids des particules de PCC ont un diamètre inférieur à 2 µm, et telles que le diamètre médian desdites particules de PCC est égal à 0,71 µm ;
- et contient un agent dispersant (qui illustre la variante préférentielle de l'invention dans le cas des essais n° 15 et 16, ainsi que 17 et 18), dans une quantité égale à 0,5 % en poids sec dudit agent par rapport au poids sec de PCC.

Selon l'étape 2) dudit procédé, on co-broye ensuite les deux suspensions selon les méthodes bien connues de l'homme du métier.
Le rapport en poids sec GCC : PCC pendant cette étape est égal à 50 : 50.
On introduit pendant cette étape une quantité d'agent de co-broyage égale à 0,4 % en poids sec par rapport au poids sec total de GCC et de PCC.

Selon l'étape 3) dudit procédé, on concentre la suspension aqueuse de GCC et de PCC co-broyés obtenue après l'étape 2), en introduisant le même agent que celui mis en oeuvre au cours de l'étape de co-broyage ; la quantité dudit agent mis en oeuvre au cours de l'étape de concentration est égale à 0,5 % en poids sec par rapport au poids sec total de GCC et de PCC.

### Essai n° 12

Cet essai illustre l'invention, mais n'illustre pas la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 50 % en mole des fonctions acides sont neutralisées par l'hydroxyde de sodium et 50 % en mole des fonctions acides sont neutralisées par l'hydroxyde de magnésium, de poids moléculaire égal à 5 700 g/mole, et d'indice de polymolécularité égal à 2,2.
Il met également en oeuvre, pendant les étapes 2) et 3), un agent de co-broyage qui est un homopolymère de l'acide acrylique, dont 37 % des fonctions acides sont neutralisées par l'hydroxyde de sodium, de poids moléculaire égal à 5 600 g/mole et d'indice de polymolécularité égal à 2,2.

### Essai n° 13

Cet essai illustre l'invention, mais n'illustre pas la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 4 500 g/mole et d'indice de polymolécularité égal à 2,2.
Il met également en oeuvre, pendant les étapes 2) et 3), un agent de co-broyage qui est un homopolymère de l'acide acrylique, dont 14 % en mole des fonctions acides sont neutralisées par l'hydroxyde sodium, de poids moléculaire égal à 5 600 g/mole et d'indice de polymolécularité égal à 2,4.

### Essai n° 14

Cet essai illustre l'invention, mais n'illustre pas la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 5 500 g/mole et d'indice de polymolécularité égal à 2,4.
Il met également en oeuvre, pendant les étapes 2) et 3), un agent de co-broyage qui est un homopolymère de l'acide acrylique, dont 14 % en mole des fonctions acides sont neutralisées par l'hydroxyde de sodium, de poids moléculaire égal à 5 600 g/mole et d'indice de polymolécularité égal à 2,4.

### Essai n° 15

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolyrnère de l'acide acrylique dont 100 % des fonctions acides sont neutralisées par l'hydroxyde de sodium, de poids moléculaire égal à 12 000 g/mole et d'indice de polymolécularité égal à 2,2.
Il met également en oeuvre, pendant les étapes 2) et 3), un agent de co-broyage qui est un homopolymère de l'acide acrylique, dont 14 % des fonctions acides sont neutralisées par l'hydroxyde de sodium, de poids moléculaire égal à 5 600 g/mole et d'indice de polymolécularité égal à 2,4.

### Essai n° 16

Cet essai illustre l'invention, et illustre 1a variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % des fonctions acides sont neutralisées par l'hydroxyde de sodium, de poids moléculaire égal à 12 000 g/mole et d'indice de polymolécularité égal à 2,2.

Il met également en oeuvre, pendant les étapes 2) et 3), un agent de broyage qui est un homopolymère de l'acide acrylique, dont 26 % en mole des fonctions acides sont neutralisées par l'hydroxyde de sodium, de poids moléculaire égal à 5 800 g/mole et d'indice de polymolécularité égal à 2,15.

### Essai n° 17

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 90 % des fonctions acides sont neutralisées par l'hydroxyde de sodium, de poids moléculaire égal à 12 000 g/mole et d'indice de polymolécularité égal à 2,2.
Il met également en oeuvre, pendant les étapes 2) et 3), un agent de co-broyage qui est un homopolymère de l'acide acrylique, dont 14 % des fonctions acides sont neutralisées par l'hydroxyde de sodium, de poids moléculaire égal à 5 600 g/mole et d'indice de polymolécularité égal à 2,4.

### Essai n° 18

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % des fonctions acides sont neutralisées par l'hydroxyde de sodium, de poids moléculaire égal à 13000 g/mole et d'indice de polymolécularité égal à 2,2.
Il met également en oeuvre, pendant les étapes 2) et 3), un agent de broyage qui est un homopolymère de l'acide acrylique, dont 26 % en mole des fonctions acides sont neutralisées par l'hydroxyde de sodium, de poids moléculaire égal à 5 800 g/mole et d'indice de polymolécularité égal à 2,15.

Pour chacun des essais n° 12 à 18, on mesure ensuite, selon les méthodes bien connues de l'homme du métier :
- le pourcentage en poids de particules de GCC et de PCC dans la suspension finale obtenue après l'étape 3), qui ont un diamètre inférieur à 1 µm, noté % < 1 µm ;
- le diamètre médian des particules de GCC et de PCC dans la suspension finale obtenue après l'étape 3), noté d₅₀ ;
- l'extrait sec de la suspension finale obtenue après l'étape 3) noté ES ;
- les viscosités Brookfield™, mesurées à 10 tours par minute et à 25 °C, de la suspension finale obtenue après l'étape 3), à l'instant t=0 et notée V_{B} (t₀), et à l'instant t=8 jours après agitation notée V_{B} (t₈).

L'ensemble de ces résultats, les caractéristiques principales des agents de co-broyage utilisés pour le co-broyage du GCC et du PCC, et les caractéristiques des agents dispersants utilisés pour la dispersion du PCC, sont reportées dans le tableau 3.

**Tableau 3 :**

| essai n° | | 12 | 13 | 14 | 15 | 16 | 17 | 18 |
|---|---|---|---|---|---|---|---|---|
| Invention hors variante (IHV) / Variante de l'Invention (VI) | | IHV | IHV | IHV | VI | VI | VI | VI |
| agent de dispersion du PCC utilisé pendant l'étape 1b) | nature | aa | aa | aa | aa | aa | aa | aa |
| | neutralisation | 50 Na | 100 | 100 | 100 | 100 | 100 | 90 |
| | | 50Mg | Na | Na | Na | Na | Na | Na |
| | M_{w} (g/mole) | 5 700 | 4 500 | 5 500 | 12 000 | 12000 | 13 000 | 12 000 |
| | Iₚ | 2,2 | 2,2 | 2,4 | 2,2 | 2,2 | 2,2 | 2,2 |
| agent de cobroyage du GCC et du PCC utilisé pendant les étapes 2) et 3) | nature | aa | aa | aa | aa | aa | aa | aa |
| | neutralisation | 37 Na | 14 Na | 14 Na | 14 Na | 26 Na | 26 Na | 14 Na |
| | M_{w} (g/mole) | 5 600 | 5 600 | 5 600 | 5 600 | 5 800 | 5 800 | 5 600 |
| | Iₚ | 2,2 | 2,4 | 2,4 | 2,4 | 2,15 | 2,15 | 2,4 |
| suspension de GCC et de PCC obtenue après l'étape 3) | % < 1 µm | 97,9 | 98,8 | 99,4 | 98,9 | 98,6 | 98,6 | 98,7 |
| | d₅₀ (µm) | 0,306 | 0,305 | 0,31 | 0,3 | 0,298 | 0,3 | 0,3 |
| | ES (%) | 72 | 73 | 73,7 | 74 | 74 | 74 | 74 |
| | V_{B} (t₀) (mPa.s) | 4 900 | 4 900 | 4 200 | 1 400 | 2 700 | 2 750 | 1 450 |
| | v_{B} (t₈) (mPa.s) | 34 900 | 35 700 | 20400 | 11 800 | 3 800 | 3850 | 12000 |

caractéristiques des agents de co-broyage du GCC et du PCC et des agents de dispersion du PCC utilisés, avec :
- "nature" désignant la nature chimique dudit agent, et notamment aa désignant un homopolymère de l'acide acrylique ;
- "neutralisation" indiquant le pourcentage molaire de fonctions acides neutralisées (nombre) et la nature de l'ion de neutralisation (symbole chimique suivant le nombre) ;
- "M_{w}" désignant le poids moléculaire en masse dudit agent ;
- "Ip" désignant l'indice de polymolécularité dudit agent ;
caractéristiques des suspensions aqueuses de GCC et de PCC obtenues après l'étape de concentration, avec :
- "% < 1 µm" désignant le pourcentage en poids de particules de GCC et de PCC ayant un diamètre inférieur à 1 µm ;
- "d₅₀ "désignant le diamètre médian des particules de carbonates de calcium naturel et précipité ;
- "ES (%)" désignant l'extrait sec de la suspension (en % en poids sec de particules de GCC et de PCC) ;
- "V_{B} (t₀) " et "V_{B} (t₈) " désignant respectivement les viscosités Brookfield™, mesurées à 10 tours par minute et à 25 °C, à l'instant t=0 et à l'instant t=8 jours après agitation.

Ces résultats démontrent donc que les agents de co-broyage de l'invention permettent de résoudre le problème technique qui se pose à l'homme du métier, à savoir :
- obtenir pour la suspension finale de GCC et de PCC co-broyés un extrait sec supérieur à 70 %, préférentiellement supérieur à 72 %, et très préférentiellement supérieur à 74 % (en poids de particules minérales par rapport au poids total de la suspension) ;
- obtenir pour cette même suspension une viscosité Brookfield™ mesurée après l'étape de co-broyage (à 25 °C et à 10 tours / minute) inférieure à 5 000 mPa.s, préférentiellement inférieure à 3 000 mPa.s, très préférentiellement inférieure à 2 000 mPa.s, et une viscosité Brookfield™ mesurée 8 jours après l'étape de co-broyage et après agitation (à 25 °C et à 10 tours / minute) inférieure à 50 000 mPa.s, préférentiellement inférieure à 30 000 mPa.s, très préférentiellement inférieure à 20 000 mPa.s ;
- obtenir, dans cette même suspension des particules de carbonate de calcium dont le diamètre médian est inférieur 0,7 µm, préférentiellement inférieur à 0,5 µm, très préférentiellement inférieur à 0,3 µm.

Ces résultats démontrent également que l'utilisation d'agents dispersants particuliers pour le PCC qui sont des homopolymères de l'acide acrylique, réunissant toutes les caractéristiques suivantes :
- un taux de neutralisation molaire des fonctions acides supérieur à 80 %, préférentiellement supérieur à 90 % de la totalité des fonctions acides, et très préférentiellement en ce qu'il est totalement neutralisé ;
- un poids moléculaire compris entre 10 000 g/mole et 15 000 g/mole, préférentiellement entre 12 000 g/mole et 14 000 g/mole ;
- un indice de polymolécularité compris entre 1,5 et 2,5 ;
permettent d'améliorer sensiblement les valeurs des viscosités Brookfield™ des suspensions de GCC et de PCC co-broyés selon la variante de l'invention, par rapport aux suspensions obtenues sans mettre en oeuvre la variante de l'invention et ce, tout en conservant des valeurs de d₅₀ inférieures ou égales à 0,3 µm et des valeurs d'extrait sec supérieures ou égales à 74 % du poids total des suspensions.

La Demanderesse ajoute que l'homme du métier peut choisir d'ajouter dans la suspension finale de GCC et de PCC obtenue après l'étape 3), un agent régulateur de viscosité. Il peut s'agir notamment d'un composé à base de zirconium, tel qu'un composé du type AZC (ammonium zirconium carbonate) ou KZC (potassium zirconium carbonate), des exemples commerciaux de tels composés étant, par exemple, les produits Zirmel™ et Bacote™ commercialisés par la société MEL CHEMICALS™.

### Exemple 4

Cet exemple illustre l'utilisation, dans le procédé de fabrication de GCC et de PCC co-broyés comprenant les étapes de :
1. préparation
   (a) d'une suspension aqueuse de GCC, avec un agent d'aide au broyage,
   (b) et d'une suspension aqueuse de PCC, comprenant un agent dispersant,
2. co-broyage desdites suspensions aqueuses de GCC et de PCC, telles que préparées au cours de l'étape 1),
3. concentration de la suspension aqueuse des carbonates de calcium naturel et précipité co broyés, telle qu'obtenue après l'étape 2),
d'un agent de co-broyage selon l'invention, ledit agent étant introduit en partie pendant l'étape 2) et pendant l'étape 3).

Cet exemple illustre le cas d'un rapport en poids sec GCC : PCC pendant l'étape de co-broyage égal à 50 : 50.

Cet exemple illustre aussi la variante préférentielle qui réside en l'utilisation, au cours de l'étape 1b) de préparation de la suspension de PCC, d'agents dispersants du PCC qui sont des homopolymères de l'acide acrylique, réunissant toutes les caractéristiques suivantes :
- un taux de neutralisation molaire des fonctions acides supérieur à 80 %, préférentiellement supérieur à 90 % de la totalité des fonctions acides, et ledit agent est très préférentiellement totalement neutralisé ;
- un poids moléculaire compris entre 10 000 g/mole et 15 000 g/mole, préférentiellement entre 12 000 g/mole et 14 000 g/mole ;
- un indice de polymolécularité compris entre 1,5 et 2,5.

Enfin, cet exemple illustre également les suspensions aqueuses de GCC et de PCC co-broyés selon l'invention.

Selon l'étape 1a) dudit procédé, on commence par préparer une suspension aqueuse de GCC selon les méthodes bien connues de l'homme du métier, en utilisant 0,27 % en poids sec par rapport au poids sec de GCC d'un polyacrylate.

Cette suspension:
- possède un extrait sec égal 74,6 % (exprimé en pourcentage en poids sec de GCC par rapport au poids total de la suspension) ;
- présente des caractéristiques granulométriques telles que 40,3 % en poids des particules de GCC ont un diamètre inférieur à 1 µm, 61,6 % en poids des particules de GCC ont un diamètre inférieur à 2 µm, et telles que le diamètre médian desdites particules de GCC est égal à 1,4 µm.

Selon l'étape 1b) dudit procédé, on prépare également une suspension aqueuse de PCC selon les méthodes bien connues de l'homme du métier.

Cette suspension:
- possède un extrait sec égal 14,1 % (exprimé en pourcentage en poids sec de PCC par rapport au poids total de la suspension) ;
- présente des caractéristiques granulométriques telles que 83,3 % en poids des particules de PCC ont un diamètre inférieur à 1 µm, 97,8 % en poids des particules de PCC ont un diamètre inférieur à 2 µm, et telles que le diamètre médian desdites particules de PCC est égal à 0,58 µm ;
- et contient un agent dispersant (qui illustre la variante préférentielle de l'invention), dans une quantité égale à 0,54 % en poids sec dudit agent par rapport au poids sec de PCC.

Selon l'étape 2) dudit procédé, on co-broye ensuite les deux suspensions selon les méthodes bien connues de l'homme du métier.
Le rapport en poids sec GCC : PCC pendant cette étape est égal à 50 : 50.
On introduit pendant cette étape une quantité d'agent de co-broyage égale à 0,5 % en poids sec par rapport au poids sec total de GCC et de PCC.

Selon l'étape 3) dudit procédé, on concentre la suspension aqueuse de GCC et de PCC co-broyés obtenue après l'étape 2), en introduisant le même agent que celui mis en oeuvre au cours de l'étape de co-broyage ; la quantité dudit agent mis en oeuvre au cours de l'étape de concentration est égale à 0,15 % en poids sec par rapport au poids sec total de GCC et de PCC.

### Essai n° 19

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % des fonctions acides sont neutralisées par l'hydroxyde de potassium, de poids moléculaire égal à 10 000 g/mole et d'indice de polymolécularité égal à 2,29.
Il met également en oeuvre, pendant les étapes 2) et 3), un agent de broyage qui est un homopolymère de l'acide acrylique, dont 37 % en mole des fonctions acides sont neutralisées par l'hydroxyde de sodium, de poids moléculaire égal à 5 800 g/mole et d'indice de polymolécularité égal à 2,15.

### Essai n° 20

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,4.
Il met également en oeuvre, pendant les étapes 2) et 3), un agent de co-broyage qui est un homopolymère de l'acide acrylique, dont 37 % des fonctions acides sont neutralisées par l'hydroxyde de sodium, de poids moléculaire égal à 5 800 g/mole et d'indice de polymolécularité égal à 2,15.

### Essai n° 21

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,4.
Il met également en oeuvre, pendant les étapes 2) et 3), un agent de co-broyage qui est un homopolymère de l'acide acrylique, dont 37 % des fonctions acides sont neutralisées par l'hydroxyde de sodium, de poids moléculaire égal à 4 900 g/mole et d'indice de polymolécularité égal à 2,13.

Pour chacun des essais n° 19 à 21, on mesure ensuite les mêmes paramètres que ceux mesurés pour les exemples précédents. L'ensemble de ces résultats, les caractéristiques principales des agents de co-broyage utilisés pour le co-broyage du GCC et du PCC, et les caractéristiques des agents dispersants utilisés pour la dispersion du PCC, sont reportés dans le tableau 4.

**Tableau 4 :**

| essai n° | | 19 | 20 | 21 |
|---|---|---|---|---|
| agent de dispersion du PCC utilisé pendant l'étape 1b) | nature | aa | aa | aa |
| | neutralisation | 100 K | 100 Na | 100 Na |
| | M_{w} (g/mole) | 10000 | 12000 | 12000 |
| | Iₚ | 2,29 | 2,4 | 2,4 |
| agent de cobroyage du GCC et du PCC utilisé pendant les étapes 2) et 3) | nature | aa | aa | aa |
| | neutralisation | 37 Na | 37 Na | 37 Na |
| | M_{w} (g/mole) | 5 800 | 5 800 | 4 900 |
| | Iₚ | 2,15 | 2,15 | 2,13 |
| suspension de GCC et de PCC obtenue après l'étape 3) | % < 1 µm | 97,6 | 96,1 | 96,3 |
| | d₅₀ (µm) | 0,295 | 0,295 | 0,29 |
| | ES (%) | 74 | 74 | 74 |
| | V_{B} (t₀) (mPa.s) | 1400 | 3600 | 3200 |
| | V_{B} (t₈) (mPa.s) | 3 500 | 9 900 | 9 300 |

caractéristiques des agents de co-broyage du GCC et du PCC, des agents de dispersion du PCC, des suspensions aqueuses de GCC et de PCC obtenues après l'étape de concentration, avec les abréviations telles que définies dans les exemples précédents.

Ces résultats démontrent donc que les agents de co-broyage de l'invention, en combinaison avec les agents de dispersion particuliers du PCC de l'invention, permettent de résoudre le problème technique qui se pose à l'homme du métier, tel que déjà explicité auparavant.
Ces combinaisons permettent d'améliorer sensiblement les valeurs des viscosités Brookfïeld™ des suspensions de GCC et de PCC co-broyés selon la variante de l'invention, tout en conservant des valeurs de d₅₀ inférieures ou égales à 0,3 µm et des valeurs d'extrait sec égales à 74 % du poids total des suspensions.

### Exemple 5

Cet exemple illustre l'utilisation, dans le procédé de fabrication de GCC et de PCC co-broyés comprenant les étapes de :
1. préparation
   (a) d'une suspension aqueuse de GCC, avec un agent d'aide au broyage,
   (b) et d'une suspension aqueuse de PCC, comprenant un agent dispersant,
2. co-broyage desdites suspensions aqueuses de GCC et de PCC, telles que préparées au cours de l'étape 1),
3. concentration de la suspension aqueuse des carbonates de calcium naturel et précipité co broyés, telle qu'obtenue après l'étape 2),
d'un agent de co-broyage selon l'invention, introduit pendant l'étape 2).

Cet exemple illustre le cas d'un rapport en poids sec GCC : PCC pendant l'étape de co-broyage égal à 50 : 50.

Cet exemple illustre aussi la variante préférentielle qui réside en l'utilisation, au cours de l'étape 1b) de préparation de la suspension de PCC, d'agents dispersants du PCC qui sont des homopolymères de l'acide acrylique, réunissant toutes les caractéristiques suivantes :
- un taux de neutralisation molaire des fonctions acides supérieur à 80 %, préférentiellement supérieur à 90 % de la totalité des fonctions acides, et ledit agent est très préférentiellement totalement neutralisé ;
- un poids moléculaire compris entre 10 000 g/mole et 15 000 g/mole, préférentiellement entre 12 000 g/mole et 14 000 g/mole ;
- un indice de polymolécularité compris entre 1,5 et 2,5.

Enfin, cet exemple illustre également les suspensions aqueuses de GCC et de PCC co-broyés selon l'invention.

Selon l'étape 1a) dudit procédé, on commence par préparer une suspension aqueuse de GCC selon les méthodes bien connues de l'homme du métier, en utilisant 0,27 % en poids sec par rapport au poids sec de GCC d'un polyacrylate.

Cette suspension:
- possède un extrait sec égal 74,5 % (exprimé en pourcentage en poids sec de GCC par rapport au poids total de la suspension) ;
- présente des caractéristiques granulométriques telles que 43,2 % en poids des particules de GCC ont un diamètre inférieur à 1 µm, et telles que le diamètre médian desdites particules de GCC est égal à 1,2 µm ;

Selon l'étape 1b) dudit procédé, on prépare également une suspension aqueuse de PCC selon les méthodes bien connues de l'homme du métier.

Cette suspension:
- possède un extrait sec égal 51,5 % (exprimé en pourcentage en poids sec de PCC par rapport au poids total de la suspension) ;
- présente des caractéristiques granulométriques telles que 65,6 % en poids des particules de PCC ont un diamètre inférieur à 1 µm, et telles que le diamètre médian desdites particules de PCC est égal à 0,82 µm ;
- et contient un agent dispersant (qui illustre la variante préférentielle de l'invention), dans une quantité égale à 0,70 % en poids sec dudit agent par rapport au poids sec de PCC.

Selon l'étape 2) dudit procédé, on co-broye ensuite les deux suspensions selon les méthodes bien connues de l'homme du métier.
Le rapport en poids sec GCC : PCC pendant cette étape est égal à 50 : 50.
On introduit pendant cette étape une quantité d'agent de co-broyage égale à 0,8 % en poids sec par rapport au poids sec total de GCC et de PCC.

Selon l'étape 3) dudit procédé, on concentre la suspension aqueuse de GCC et de PCC co-broyés obtenue après l'étape 2).

### Essai n° 22

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,4.
Il met également en oeuvre, pendant l'étape 2) un agent de co-broyage qui est un homopolymère de l'acide acrylique, non neutralisé, de poids moléculaire égal à 5 600 g/mole et d'indice de polymolécularité égal à 2,16.

### Essai n° 23

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,4.

Il met également en oeuvre, pendant l'étape 2) un agent de co-broyage qui est un mélange, dont 38 % des fonctions acides sont neutralisées par l'hydroxyde de sodium :
- de 83 % en poids sec d'un homopolymère de l'acide acrylique, de poids moléculaire égal à 5 600 g/mole et d'indice de polymolécularité égal à 2,4,
- de 17 % en poids sec d'un homopolymère de l'acide acrylique obtenu par polymérisation RAFT (selon la méthode telle que décrite dans le document FR 2 821 620), de poids moléculaire égal à 7 600 g/mole et d'indice de polymolécularité égal à 1,68.

### Essai n° 24

Cet essai illustre l'invention, et illustre la variante préférentielle qui consiste en la mise en oeuvre d'un agent de dispersion particulier pour le PCC, tel que défini en introduction de cet exemple.

Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,4.

Il met également en oeuvre, pendant l'étape 2) un agent de co-broyage qui est un mélange :
- de 50 % en poids sec d'un homopolymère de l'acide acrylique, non neutralisé, de poids moléculaire égal à 5 600 g/mole et d'indice de polymolécularité égal à 2,16,
- et de 50 % en poids sec d'un mélange dont 38 % des fonctions acides sont neutralisées par l'hydroxyde de sodium, ledit mélange étant constitué :
   - de 83 % en poids sec d'un homopolymère de l'acide acrylique, de poids moléculaire égal à 5 600 g/mole et d'indice de polymolécularité égal à 2,4,
   - de 17 % en poids sec d'un homopolymère de l'acide acrylique obtenu par polymérisation RAFT (selon la méthode telle que décrite dans le document FR 2 821 620), de poids moléculaire égal à 7 600 g/mole et d'indice de polymolécularité égal à 1,68,

Pour chacun des essais n° 22 à 24, on mesure ensuite les mêmes paramètres que ceux mesurés pour les exemples précédents. L'ensemble de ces résultats est reporté dans le tableau 5.

**Tableau 5 :**

| essai n° | | 22 | 23 | 24 |
|---|---|---|---|---|
| suspension de GCC et de PCC obtenue après l'étape 3) | % < 1 µm | 96,8 | 97,4 | 97,4 |
| | d₅₀ (µm) | 0,286 | 0,287 | 0,283 |
| | ES (%) | 71,7 | 72,3 | 71,6 |
| | V_{B} (t₀) (mPa.s) | 2 100 | 1 900 | 1 870 |
| | V_{B} (t₈) (mPa.s) | 5200 | 6600 | 5 700 |

caractéristiques des suspensions aqueuses de GCC et de PCC obtenues après l'étape de concentration, avec les abréviations telles que définies dans les exemples précédents

Ces résultats démontrent donc que les agents de co-broyage de l'invention, en combinaison avec les agents de dispersion particuliers du PCC de l'invention, permettent de résoudre le problème technique qui se pose à l'homme du métier, tel que déjà explicité auparavant.

### Exemple 6

Cet exemple illustre l'utilisation, dans le procédé de fabrication de GCC et de PCC co-broyés comprenant les étapes de :
1. préparation
   (a) d'une suspension aqueuse de GCC, avec un agent d'aide au broyage,
   (b) et d'une suspension aqueuse de PCC, comprenant un agent dispersant,
2. co-broyage desdites suspensions aqueuses de GCC et de PCC, telles que préparées au cours de l'étape 1),
3. concentration de la suspension aqueuse des carbonates de calcium naturel et précipité co broyés, telle qu'obtenue après l'étape 2),
d'un agent de co-broyage selon l'invention, introduit pendant l'étape 2) et pendant l'étape 3).

Cet exemple illustre le cas d'un rapport en poids sec GCC : PCC pendant l'étape de co-broyage égal à 50 : 50.

Cet exemple illustre aussi la variante préférentielle qui réside en l'utilisation, au cours de l'étape 1b) de préparation de la suspension de PCC, d'agents dispersants du PCC qui sont des homopolymères de l'acide acrylique, réunissant toutes les caractéristiques suivantes :
- un taux de neutralisation molaire des fonctions acides supérieur à 80 %, préférentiellement supérieur à 90 % de la totalité des fonctions acides, et ledit agent est très préférentiellement totalement neutralisé ;
- un poids moléculaire compris entre 10 000 g/mole et 15 000 g/mole, préférentiellement entre 12 000 g/mole et 14 000 g/mole ;
- un indice de polymolécularité compris entre 1,5 et 2,5.

Enfin, cet exemple illustre également les suspensions aqueuses de GCC et de PCC co-broyés selon l'invention.

Selon l'étape 1a) dudit procédé, on commence par préparer une suspension aqueuse de GCC selon les méthodes bien connues de l'homme du métier, en utilisant 0,27 % en poids sec d'un polyacrylate par rapport au poids sec de GCC.

Cette suspension:
- possède un extrait sec égal 74,6 % (exprimé en pourcentage en poids sec de GCC par rapport au poids total de la suspension) ;
- présente des caractéristiques granulométriques telles que 40,3 % en poids des particules de GCC ont un diamètre inférieur à 1 µm, et telles que le diamètre médian desdites particules de GCC est égal à 1,4 µm.

Selon l'étape 1b) dudit procédé, on prépare également une suspension aqueuse de PCC selon les méthodes bien connues de l'homme du métier.

Cette suspension:
- possède un extrait sec égal 13,1 % (exprimé en pourcentage en poids sec de PCC par rapport au poids total de la suspension) ;
- présente des caractéristiques granulométriqùes telles que 19,9 % en poids des particules de PCC ont un diamètre inférieur à 1 µm, et telles que le diamètre médian desdites particules de PCC est égal à 1,43 µm ;
- et contient un agent dispersant (qui illustre la variante préférentielle de l'invention), dans une quantité égale à 0,54 % en poids sec dudit agent par rapport au poids sec de PCC.

Selon l'étape 2) dudit procédé, on co-broye ensuite les deux suspensions selon les méthodes bien connues de l'homme du métier.
Le rapport en poids sec GCC : PCC pendant cette étape est égal à 50 : 50.
On introduit pendant cette étape une quantité d'agent de co-broyage égale à 0,50 % en poids sec par rapport au poids sec total de GCC et de PCC, puis 0,15 % du même agent ou d'un autre agent pendant l'étape 3).

Selon l'étape 3) dudit procédé, on concentre la suspension aqueuse de GCC et de PCC en présence de 0,15 % en poids sec d'un agent de co-broyage qui est le même que celui mis en oeuvre pendant l'étape 2).

### Essai n° 25

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,3.
Il met également en oeuvre, pendant les étapes 2) et 3), un agent de co-broyage qui est un homopolymère de l'acide acrylique, non neutralisé, de poids moléculaire égal à 5 600 g/mole et d'indice de polymolécularité égal à 2,09.

### Essai n° 26

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un copolymère (acide acrylique : acide méthacrylique) (90: 10 en poids), obtenu par polymérisation RAFT (selon la méthode telle que décrite dans le document FR 2 821 620), dont 100 % en mole des fonctions acides sont neutralisées par l'hydroxyde de sodium, de poids moléculaire égal à 12 000 g/mole, et d'indice de polymolécularité égal à 1,8.
Il met également en oeuvre, pendant les étapes 2) et 3), un agent de co-broyage qui est un homopolymère de l'acide acrylique, non neutralisé, de poids moléculaire égal à 5 600 g/mole et d'indice de polymolécularité égal à 2,09.

### Essai n° 27

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,3.
Il met également en oeuvre, pendant les étapes 2) et 3) un agent de co-broyage qui est un copolymère (acide acrylique : phosphate de méthacrylate d'éthylène glycol) (90 : 10 en poids), dont 40 % des fonctions acides sont neutralisées par l'hydroxyde de sodium, de poids moléculaire égal à 5 000 g/mole et d'indice de polymolécularité égal à 2,45.

### Essai n° 28

Cet essai illustre l'invention, et illustre la variante préférentielle qui consiste en la mise en oeuvre d'un agent de dispersion particulier pour le PCC, tel que défini en introduction de cet exemple.
Il met en oeuvre, pendant l'étape 1b) de préparation de la suspension de PCC un homopolymère de l'acide acrylique dont 100 % en mole des fonctions acides sont neutralisées par l'hydroxyde de sodium, de poids moléculaire égal à 12 000 g/mole, et d'indice de polymolécularité égal à 2,3.
Il met également en oeuvre, pendant les étapes 2) et 3) un agent de co-broyage qui est un copolymère (acide acrylique : acide méthacrylique) (90 : 10 en poids), dont 40 % des fonctions acides sont neutralisées par l'hydroxyde de sodium, de poids moléculaire égal à 5 000 g/mole et d'indice de polymolécularité égal à 2,45.

Pour chacun des essais n° 25 à 28, on mesure ensuite les mêmes paramètres que ceux mesurés pour les exemples précédents. L'ensemble de ces résultats, les caractéristiques principales des agents de co-broyage utilisés pour le co-broyage du GCC et du PCC, et les caractéristiques des agents dispersants utilisés pour la dispersion du PCC, sont reportés dans le tableau 6.

**Tableau 6 :**

| essai n° | | 25 | 26 | 27 | 28 |
|---|---|---|---|---|---|
| agent de dispersion du PCC utilisé pendant l'étape 1b) | nature | aa | aa / ama | aa | aa |
| | neutralisation | 100 Na | 100 Na | 100 Na | 100 Na |
| | M_{w} (g/mole) | 12000 | 12000 | 12000 | 12000 |
| | Iₚ | 2,3 | 1,8 | 2,3 | 2,3 |
| agent de cobroyage du GCC et du PCC utilisé pendant les étapes 2) et 3) | nature | aa | aa | aa / po4maeg | aa / ama |
| | neutralisation | 0 | 0 | 40 Na | 40 Na |
| | M_{w} (g/mole) | 5600 | 5600 | 5000 | 5000 |
| | Iₚ | 2,09 | 2,09 | 2,45 | 2,45 |
| suspension de GCC et de PCC obtenue après l'étape 3) | % < 1 µm | 97,5 | 97,1 | 97,7 | 97,4 |
| | d₅₀ (µm) | 0,292 | 0,292 | 0,299 | 0,293 |
| | ES (%) | 73,7 | 73,9 | 74,0 | 74,0 |
| | V_{B} (tₒ) (mPa.s) | 3 300 | 1 400 | 2000 | 2000 |
| | V_{B}(t₈) (mPa.s) | 4 100 | 1 700 | 4 800 | 4 300 |

caractéristiques des agents de co-broyage du GCC et du PCC, des agents de dispersion du PCC, des suspensions aqueuses de GCC et de PCC obtenues après l'étape de concentration, avec les abréviations telles que définies dans les exemples précédents, et avec :
- aa / ama : copolymère (acide acrylique : acide méthacrylique) (90 / 10 en poids),
- aa / po4maeg : copolymère (acide acrylique : phosphate de méthacrylate d'éthylène glycol) (90 : 10 en poids).

Ces résultats démontrent donc que les agents de co-broyage de l'invention, en combinaison avec les agents de dispersion particuliers du PCC de l'invention, permettent de résoudre le problème technique qui se pose à l'homme du métier, tel que déjà explicité auparavant.

## Revendications

1. Utilisation, dans un procédé de fabrication de GCC et de PCC co-broyés, comprenant les étapes de :
1. préparation
(a) d'une suspension aqueuse de GCC, comprenant éventuellement au moins un agent dispersant et / ou au moins un agent d'aide au broyage,
(b) et d'une suspension aqueuse de PCC, comprenant éventuellement au moins un agent dispersant,
2. co-broyage desdites suspensions aqueuses de GCC et de PCC, telles que préparées au cours de l'étape 1),
3. éventuellement concentration de la suspension aqueuse de GCC et de PCC co-broyés, telle qu'obtenue après l'étape 2),
4. éventuellement séchage de la suspension aqueuse de GCC et de PCC co-broyés, telle qu'obtenue après l'étape 2) ou 3),
d'un agent de co-broyage, **caractérisé en ce que** :
(a) ledit agent est constitué d'au moins un homopolymère et / ou d'au moins un copolymère de l'acide acrylique, partiellement neutralisé, et dont le taux de neutralisation molaire des fonctions acides est inférieur à 75 %, préférentiellement inférieur à 50 %, et très préférentiellement inférieur à 20 % de la totalité des fonctions acides,
(b) et **en ce qu'**il est introduit :
- entre l'étape 1) et l'étape 2), dans la suspension aqueuse de GCC préparée à l'étape 1a) et / ou dans la suspension aqueuse de PCC préparée à l'étape 1b) et / ou dans le mélange de ces deux suspensions,
- et / ou pendant l'étape 2) de co-broyage,
- et éventuellement entre l'étape 2) et l'étape 3),
- et éventuellement pendant l'étape 3).

2. Utilisation selon la revendication 1, **caractérisée en ce qu'**on met en oeuvre de 0,5 % à 2 % en poids sec de l'agent de co-broyage par rapport au poids sec total de GCC et de PCC, et **en ce que** l'agent de co-broyage :
- est neutralisé par les hydroxydes, les carbonates, les hydrogénocarbonates de sodium et de potassium, les hydroxydes, les oxydes de calcium et de magnésium, l'ammoniaque ou leurs mélanges, préférentiellement par les hydroxydes, les carbonates, les hydrogénocarbonates de sodium et de potassium, l'ammoniaque ou leurs mélanges, et très préférentiellement par l'hydroxyde de sodium ;
- présente un poids moléculaire compris entre 4 000 g/mole et 15 000 g/mole, préférentiellement compris entre 4 000 g/mole et 10 000 g/mole ;
- et présente un indice de polymolécularité compris entre 1,5 et 3,5, préférentiellement entre 1,5 et 2,5 ;
- lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

3. Utilisation, selon l'une des revendications 1 à 2, **caractérisée en ce que** la suspension aqueuse de PCC préparée au cours de l'étape 1b), contient au moins un agent dispersant du PCC qui est un homopolymère et / ou un copolymère de l'acide acrylique, réunissant toutes les caractéristiques suivantes :
- un taux de neutralisation molaire des fonctions acides supérieur à 80 %, préférentiellement supérieur à 90 % de la totalité des fonctions acides, et qui est très préférentiellement totalement neutralisé ;
- un poids moléculaire compris entre 10 000 g/mole et 15 000 g/mole, préférentiellement entre 12 000 g/mole et 14 000 g/mole ;
- un indice de polymolécularité compris entre 1,5 et 2,5.

4. Utilisation, selon la revendication 3, **caractérisée :**
- **en ce qu'**on met en oeuvre dans la suspension aqueuse de PCC préparée à l'étape 1b), de 0,5 % à 2 %, préférentiellement de 0,5 % à 1 % en poids sec de l'agent de dispersion du PCC par rapport au poids sec de PCC ;
- **en ce que** l'agent de dispersion du PCC est neutralisé par les hydroxydes, les carbonates, les hydrogénocarbonates de sodium, de potassium, l'ammoniaque ou leurs mélanges, et préférentiellement par l'hydroxyde de sodium ;
- et **en ce que** l'agent dispersant mis en oeuvre dans la suspension de PCC préparée à l'étape 1b), lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

5. Suspensions aqueuses de GCC et de PCC co-broyés, **caractérisées en ce qu'**elles contiennent au moins un agent de co-broyage du GCC et du PCC qui est constitué d'au moins un homopolymère et / ou d'au moins un copolymère de l'acide acrylique, partiellement neutralisé, et dont le taux de neutralisation molaire des fonctions acides est inférieur à 75 %, préférentiellement inférieur à 50 %, et très préférentiellement inférieur à 20 % de la totalité des fonctions acides.

6. Suspensions aqueuses de GCC et de PCC co-broyés selon la revendication 5, **caractérisées :**
- **en ce qu'**elles contiennent de 0,5 % à 2 % en poids sec d'agent de co-broyage du GCC et du PCC par rapport au poids sec total de GCC et de PCC ;
- **en ce que** l'agent de co-broyage du GCC et du PCC est neutralisé par les hydroxydes, les carbonates, les hydrogénocarbonates de sodium et de potassium, les hydroxydes, les oxydes de calcium et de magnésium, l'ammoniaque ou leurs mélanges, préférentiellement par les hydroxydes, les carbonates, les hydrogénocarbonates de sodium et de potassium, l'ammoniaque ou leurs mélanges, et très préférentiellement par l'hydroxyde de sodium ;
- **en ce que** l'agent de co-broyage du GCC et du PCC présente un poids moléculaire compris entre 4 000 g/mole et 15 000 g/mole, préférentiellement entre 4 000 g/mole et 10 000 g/mole ;
- **en ce que** l'agent de co-broyage du GCC et du PCC présente un indice de polymolécularité compris entre 1,5 et 3,5, préférentiellement entre 1,5 et 2,5 ;
- et **en ce que** l'agent de co-broyage du GCC et du PCC, lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

7. Suspensions aqueuses de GCC et de PCC co-broyés selon l'une des revendications 5 ou 6, **caractérisées en ce qu'**elles contiennent un pourcentage en poids sec de PCC par rapport au poids sec total de GCC et de PCC, compris entre 10 % et 90 %, préférentiellement entre 20 % et 80 %, très préférentiellement entre 30 % et 70 %, et **en ce qu'**elles contiennent un pourcentage en poids sec total de PCC et de GCC, par rapport au poids total de la suspension, supérieur à 70 %, préférentiellement supérieur à 72 %, très préférentiellement supérieur à 74 %.

8. Suspensions aqueuses de GCC et de PCC co-broyés selon l'une des revendications 5 à 7, **caractérisées en ce que** les particules de GCC et de PCC qu'elles contiennent :
- présentent un facteur de distribution (100 x d₃₀/d₇₀, où dₓ désigne le diamètre moyen tel que x % en poids des particules ont un diamètre inférieur à ce diamètre moyen) supérieur à 30, préférentiellement supérieur à 40, très préférentiellement supérieur à 45 ;
- et présentent un diamètre médian inférieur à 0,7 µm, préférentiellement inférieur à 0,5 µm, très préférentiellement inférieur à 0,3 µm.

9. Suspensions aqueuses de GCC et de PCC co-broyés selon l'une des revendications 5 à 8, **caractérisées en ce qu'**elles contiennent au moins un agent dispersant du PCC qui est un homopolymère et / ou un copolymère de l'acide acrylique, réunissant toutes les caractéristiques suivantes :
- un taux de neutralisation molaire des fonctions acides supérieur à 80 %, préférentiellement supérieur à 90 % de la totalité des fonctions acides, et qui est très préférentiellement totalement neutralisé ;
- un poids moléculaire compris entre 10 000 g/mole et 15 000 g/mole, préférentiellement entre 12 000 g/mole et 14 000 g/mole ;
- un indice de polymolécularité compris entre 1,5 et 2,5.

10. Suspensions aqueuses de GCC et de PCC co-broyés selon la revendication 9, **caractérisées :**
- **en ce qu'**elles contiennent de 0,5 % à 2 %, préférentiellement de 0,5 % à 1 % en poids sec dudit agent dispersant du PCC par rapport au poids sec de PCC ;
- **en ce que** l'agent dispersant du PCC est neutralisé par les hydroxydes, les carbonates, les hydrogénocarbonates de sodium, de potassium, l'ammoniaque ou leurs mélanges, et préférentiellement par l'hydroxyde de sodium ;
- **en ce que** l'agent de dispersion du PCC, lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

11. Pigments secs de GCC et de PCC co-broyés **caractérisés en ce qu'**ils contiennent au moins un agent de co-broyage du GCC et du PCC qui est au moins un homopolymère et / ou au moins un copolymère de l'acide acrylique, partiellement neutralisé, et dont le taux de neutralisation molaire des fonctions acides est inférieur à 75 %, préférentiellement inférieur à 50 %, et très préférentiellement inférieur à 20 % de la totalité des fonctions acides.

12. Pigments secs de GCC et de PCC co-broyés selon la revendication 11, **caractérisés en ce qu'**ils contiennent un pourcentage en poids sec de PCC par rapport au poids sec total de GCC et de PCC, compris entre 10 % et 90 %, préférentiellement entre 20 % et 80 %, très préférentiellement entre 30 % et 70 % et **en ce qu'**ils contiennent de 0,5 % à 2 % en poids sec dudit agent de co-broyage du GCC et du PCC par rapport au poids sec total de GCC et de PCC.

13. Pigments secs de GCC et de PCC co-broyés selon l'une des revendications 11 ou 12, **caractérisés en ce que** l'agent de co-broyage du GCC et du PCC :
- est neutralisé par les hydroxydes, les carbonates, les hydrogénocarbonates de sodium et de potassium, les hydroxydes, les oxydes de calcium et de magnésium, l'ammoniaque ou leurs mélanges, préférentiellement par les hydroxydes, les carbonates, les hydrogénocarbonates de sodium et de potassium, l'ammoniaque ou leurs mélanges, et préférentiellement par l'hydroxyde de sodium ;
- présente un poids moléculaire compris entre 4 000 g/mole et 15 000 g/mole, préférentiellement entre 4 000 g/mole et 10 000 g/mole ;
- présente un indice de polymolécularité compris entre 1,5 et 3,5, préférentiellement entre 1,5 et 2,5 ;
- lorsqu'il s'agit d'un copolymère de l'acide acrylique, comporte au moins un autre monomère que l'acide acrylique choisi parmi les monomères à insaturation éthylénique et à fonction monocarboxylique tels que l'acide méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide 2-acrylamido-2-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges.

14. Pigments secs de GCC et de PCC co-broyés selon l'une des revendications 11 à 13, **caractérisés en ce qu'**ils contiennent aussi au moins un agent dispersant du PCC qui est un homopolymère et / ou un copolymère de l'acide acrylique, réunissant toutes les caractéristiques suivantes :
- il présente un taux de neutralisation molaire des fonctions acides supérieur à 80 %, préférentiellement supérieur à 90 % de la totalité des fonctions acides, et est très préférentiellement totalement neutralisé ;
- il présente un poids moléculaire compris entre 10 000 g/mole et 15 000 g/mole, préférentiellement entre 12 000 g/mole et 14 000 g/mole ;
- il présente un indice de polymolécularité compris entre 1,5 et 2,5.

15. Utilisation des suspensions aqueuses de GCC et de PCC co-broyés selon l'une des revendications 5 à 10, et des pigments secs de GCC et de PCC co-broyés selon l'une des revendications 11 à 14, dans la fabrication du papier et notamment dans le couchage de la feuille de papier et dans la fabrication de la feuille de papier, et dans la fabrication de peintures.

## Patentansprüche

1. Verwendung, in einem Herstellungsverfahren von co-gemahlenem GCC und PCC, umfassend die Schritte:
1. Herstellung
(a) einer wässrigen Suspension von GCC, gegebenenfalls umfassend mindestens ein Dispergiermittel und/oder mindestens ein Mahlhilfsmittel,
(b) und einer wässrigen Suspension von PCC, gegebenenfalls umfassend mindestens ein Dispergiermittel,
2. Co-Mahlen der wässrigen Suspensionen von GCC und von PCC, wie während des Schritts 1) hergestellt,
3. gegebenenfalls Konzentration der wässrigen Suspension von co-gemahlenem GCC und PCC, wie nach dem Schritt 2) erhalten,
4. gegebenenfalls Trocknung der wässrigen Suspension von co-gemahlenem GCC und PCC, wie nach dem Schritt 2) oder 3) erhalten,
eines Co-Mahlmittels, **dadurch gekennzeichnet, dass**:
(a) das Mittel aus mindestens einem Homopolymer und/oder aus mindestens einem Copolymer von Acrylsäure, teilweise neutralisiert, besteht, und dessen molarer Neutralisationsgrad der Säurefunktionen kleiner als 75 %, bevorzugt kleiner als 50 % und besonders bevorzugt kleiner als 20 %, der Gesamtheit der Säurefunktionen ist,
(b) und dadurch, dass dieses eingebracht wird:
- zwischen dem Schritt 1) und dem Schritt 2), in die wässrige Suspension von GCC, die in dem Schritt 1a) hergestellt wird, und/oder in die wässrige Suspension von PCC, die in dem Schritt 1b) hergestellt wird, und/oder in die Mischung dieser beiden Suspensionen,
- und/oder während des Schritts 2) des Co-Mahlens,
- und gegebenenfalls zwischen dem Schritt 2) und dem Schritt 3),
- und gegebenenfalls während des Schritts 3).

2. Verwendung nach Anspruch 1, **dadurch gekennzeichnet, dass** 0,5 % bis 2 %, bezogen auf das Trockengewicht, des Co-Mahlmittels in Bezug auf das Gesamttrockengewicht von GCC und von PCC eingesetzt werden, und dadurch, dass das Co-Mahlmittel:
- neutralisiert wird durch Hydroxide, Carbonate, Hydrogenocarbonate von Natrium und Kalium, Hydroxide, Oxide von Calcium und Magnesium, Ammoniak oder ihre Mischungen, bevorzugt durch Hydroxide, Carbonate, Hydrogenocarbonate von Natrium und Kalium, Ammoniak oder ihre Mischungen, und besonders bevorzugt durch Natriumhydroxid;
- ein Molekulargewicht zwischen 4.000 g/mol und 15.000 g/mol, bevorzugt zwischen 4.000 g/mol und 10.000 g/mol, aufweist;
- und einen Polymolekularitätsindex zwischen 1,5 und 3,5, vorzugsweise zwischen 1,5 und 2,5, aufweist;
- wenn es sich um ein Copolymer von Acrylsäure handelt, mindestens ein anderes Monomer als Acrylsäure umfasst, ausgewählt aus Monomeren mit ethylenischer Unsättigung und einer Monocarbonsäure-Funktion, wie Methacrylsäure, oder auch Halbestern von Disäuren, wie C₁-C₄-Monoestern von Malein- oder Itaconsäure, oder ihren Mischungen, oder ausgewählt aus Monomeren mit ethylenischer Unsättigung und einer Dicarbonsäure-Funktion, wie Croton-, Isocroton-, Zimt-, Itacon-, Maleinsäure, oder auch Carbonsäureanhydriden, wie Maleinsäureanhydrid, oder ausgewählt aus Monomeren mit ethylenischer Unsättigung und einer Sulfonsäure-Funktion, wie 2-Acrylamido-2-methylpropansulfonsäure, Natriummethallylsulfonat, Vinylsulfonsäure und Styrolsulfonsäure, oder sogar auch ausgewählt aus Monomeren mit ethylenischer Unsättigung und einer Phosphorsäure-Funktion, wie Vinylphosphorsäure, Ethylenglykolmethacrylatphosphat, Propylenglykolmethacrylatphosphat, Ethylenglykolacrylatphosphat, Propylenglykolacrylatphosphat und ihren Ethoxylaten, oder sogar auch ausgewählt aus Monomeren mit ethylenischer Unsättigung und einer Phosphonsäure-Funktion, wie Vinylphosphonsäure, oder ihren Mischungen.

3. Verwendung nach einem der Ansprüche 1 bis 2, **dadurch gekennzeichnet, dass** die wässrige Suspension von PCC, die während des Schritts 1b) hergestellt wird, mindestens ein Dispergiermittel von PCC enthält, das ein Homopolymer und/oder ein Copolymer von Acrylsäure ist, wobei alle folgenden Charakteristiken zusammengeführt werden:
- ein molarer Neutralisationsgrad der Säurefunktionen von mehr als 80 %, bevorzugt mehr als 90 %, der Gesamtheit der Säurefunktionen, und der besonders bevorzugt vollständig neutralisiert ist;
- ein Molekulargewicht zwischen 10.000 g/mol und 15.000 g/mol, bevorzugt zwischen 12.000 g/mol und 14.000 g/mol;
- ein Polymolekularitätsindex zwischen 1,5 und 2,5.

4. Verwendung nach Anspruch 3, **dadurch gekennzeichnet:**
- **dass** in der wässrigen Suspension von PCC, die in dem Schritt 1b) hergestellt wird, 0,5 % bis 2 %, bevorzugt 0,5 % bis 1 %, bezogen auf das Trockengewicht, des Dispergiermittels von PCC in Bezug auf das Trockengewicht von PCC eingesetzt werden;
- **dass** das Dispergiermittel von PCC neutralisiert wird durch Hydroxide, Carbonate, Hydrogenocarbonate von Natrium, Kalium, Ammoniak oder ihre Mischungen, und bevorzugt durch Natriumhydroxid;
- und **dass** das Dispergiermittel, das in der Suspension von PCC eingesetzt wird, die in Schritt 1b) hergestellt wird, wenn es sich um ein Copolymer von Acrylsäure handelt, mindestens ein anderes Monomer als Acrylsäure umfasst, ausgewählt aus Monomeren mit ethylenischer Unsättigung und einer Monocarbonsäure-Funktion, wie Methacrylsäure, oder auch Halbestern von Disäuren, wie C₁-C₄-Monoestern von Malein- oder Itaconsäure, oder ihren Mischungen, oder ausgewählt aus Monomeren mit ethylenischer Unsättigung und einer Dicarbonsäure-Funktion, wie Croton-, Isocroton-, Zimt-, Itacon-, Maleinsäure, oder auch Carbonsäureanhydriden, wie Maleinsäureanhydrid, oder ausgewählt aus Monomeren mit ethylenischer Unsättigung und einer Sulfonsäure-Funktion, wie 2-Acrylamido-2-methylpropansulfonsäure, Natriummethallylsulfonat, Vinylsulfonsäure und Styrolsulfonsäure, oder sogar auch ausgewählt aus Monomeren mit ethylenischer Unsättigung und einer Phosphorsäure-Funktion, wie Vinylphosphorsäure, Ethylenglykolmethacrylatphosphat, Propylenglykolmethacrylatphosphat, Ethylenglykolacrylatphosphat, Propylenglykolacrylatphosphat und ihren Ethoxylaten, oder sogar auch ausgewählt aus Monomeren mit ethylenischer Unsättigung und einer Phosphonsäure-Funktion, wie Vinylphosphonsäure, oder ihren Mischungen.

5. Wässrige Suspensionen von co-gemahlenem GCC und PCC, **dadurch gekennzeichnet, dass** diese mindestens ein Co-Mahlmittel von GCC und von PCC enthalten, das aus mindestens einem Homopolymer und/oder mindestens einem Copolymer von Acrylsäure, teilweise neutralisiert, besteht, und dessen molarer Neutralisationsgrad der Säurefunktionen kleiner als 75 %, bevorzugt kleiner als 50 % und besonders bevorzugt kleiner als 20 %, der Gesamtheit der Säurefunktionen ist.

6. Wässrige Suspensionen von co-gemahlenem GCC und PCC nach Anspruch 5, **dadurch gekennzeichnet:**
- **dass** diese 0,5 % bis 2 %, bezogen auf das Trockengewicht, Co-Mahlmittel von GCC und von PCC in Bezug auf das Gesamttrockengewicht von GCC und von PCC enthalten;
- **dass** das Co-Mahlmittel von GCC und von PCC neutralisiert ist durch Hydroxide, Carbonate, Hydrogenocarbonate von Natrium und Kalium, Hydroxide, Oxide von Calcium und Magnesium, Ammoniak oder ihre Mischungen, bevorzugt durch Hydroxide, Carbonate, Hydrogenocarbonate von Natrium und Kalium, Ammoniak oder ihre Mischungen, und besonders bevorzugt durch Natriumhydroxid;
- **dass** das Co-Mahlmittel von GCC und von PCC ein Molekulargewicht zwischen 4.000 g/mol und 15.000 g/mol, bevorzugt zwischen 4.000 g/mol und 10.000 g/mol, aufweist;
- **dass** das Co-Mahlmittel von GCC und von PCC einen Polymolekularitätsindex zwischen 1,5 und 3,5, vorzugsweise zwischen 1,5 und 2,5, aufweist;
- und **dass** das Co-Mahlmittel von GCC und von PCC, wenn es sich um ein Copolymer von Acrylsäure handelt, mindestens ein anderes Monomer als Acrylsäure umfasst, ausgewählt aus Monomeren mit ethylenischer Unsättigung und einer Monocarbonsäure-Funktion, wie Methacrylsäure, oder auch Halbestern von Disäuren, wie C₁-C₄-Monoestern von Malein- oder Itaconsäure, oder ihren Mischungen, oder ausgewählt aus Monomeren mit ethylenischer Unsättigung und einer Dicarbonsäure-Funktion, wie Croton-, Isocroton-, Zimt-, Itacon-, Maleinsäure, oder auch Carbonsäureanhydriden, wie Maleinsäureanhydrid, oder ausgewählt aus Monomeren mit ethylenischer Unsättigung und einer Sulfonsäure-Funktion, wie 2-Acrylamido-2-methylpropansulfonsäure, Natriummethallylsulfonat, Vinylsulfonsäure und Styrolsulfonsäure, oder sogar auch ausgewählt aus Monomeren mit ethylenischer Unsättigung und einer Phosphorsäure-Funktion, wie Vinylphosphorsäure, Ethylenglykolmethacrylatphosphat, Propylenglykolmethacrylatphosphat, Ethylenglykolacrylatphosphat, Propylenglykolacrylatphosphat und ihren Ethoxylaten, oder sogar auch ausgewählt aus Monomeren mit ethylenischer Unsättigung und einer Phosphonsäure-Funktion, wie Vinylphosphonsäure, oder ihren Mischungen.

7. Wässrige Suspensionen von co-gemahlenem GCC und PCC nach einem der Ansprüche 5 oder 6, **dadurch gekennzeichnet, dass** diese einen Prozentsatz, bezogen auf das Trockengewicht, von PCC in Bezug auf das Gesamttrockengewicht von GCC und von PCC zwischen 10 % und 90 %, bevorzugt zwischen 20 % und 80 %, besonders bevorzugt zwischen 30 % und 70 %, enthalten, und dadurch, dass diese einen Prozentsatz, bezogen auf das Gesamttrockengewicht, von PCC und von GCC, in Bezug auf das Gesamtgewicht der Suspension von mehr als 70 %, bevorzugt mehr als 72 %, besonders bevorzugt mehr als 74 %, enthalten.

8. Wässrige Suspensionen von co-gemahlenem GCC und PCC nach einem der Ansprüche 5 bis 7, **dadurch gekennzeichnet, dass** die Teilchen von GCC und von PCC, die diese umfassen:
- einen Verteilungsfaktor (100 x d₃₀/d₇₀, wobei dₓ den mittleren Durchmesser derart bezeichnet, dass x Gew.-% der Teilchen einen Durchmesser haben, der kleiner ist als dieser mittlere Durchmesser) von mehr als 30, bevorzugt mehr als 40, besonders bevorzugt mehr als 45, aufweisen;
- und einen mittleren Durchmesser von weniger als 0,7 µm, bevorzugt weniger als 0,5 µm, besonders bevorzugt weniger als 0,3 µm, aufweisen.

9. Wässrige Suspensionen von co-gemahlenem GCC und PCC nach einem der Ansprüche 5 bis 8, **dadurch gekennzeichnet, dass** diese mindestens ein Dispergiermittel von PCC enthalten, das ein Homopolymer und/oder ein Copolymer von Acrylsäure ist, wobei alle folgenden Charakteristiken zusammengeführt werden:
- ein molarer Neutralisationsgrad der Säurefunktionen von mehr als 80 %, bevorzugt mehr als 90 %, der Gesamtheit der Säurefunktionen, und der besonders bevorzugt vollständig neutralisiert ist;
- ein Molekulargewicht zwischen 10.000 g/mol und 15.000 g/mol, bevorzugt zwischen 12.000 g/mol und 14.000 g/mol;
- ein Polymolekularitätsindex zwischen 1,5 und 2,5.

10. Wässrige Suspensionen von co-gemahlenem GCC und PCC nach Anspruch 9, **dadurch gekennzeichnet:**
- **dass** diese 0,5 % bis 2 %, bevorzugt 0,5 % bis 1 %, bezogen auf das Trockengewicht, des Dispergiermittels von PCC in Bezug auf das Trockengewicht von PCC enthalten;
- **dass** das Dispergiermittel von PCC neutralisiert ist durch Hydroxide, Carbonate, Hydrogenocarbonate von Natrium, Kalium, Ammoniak oder ihre Mischungen, und bevorzugt durch Natriumhydroxid;
- **dass** das Dispergiermittel von PCC, wenn es sich um ein Copolymer von Acrylsäure handelt, mindestens ein anderes Monomer als Acrylsäure umfasst, ausgewählt aus Monomeren mit ethylenischer Unsättigung und einer Monocarbonsäure-Funktion, wie Methacrylsäure, oder auch Halbestern von Disäuren, wie C₁-C₄-Monoestern von Malein- oder Itaconsäure, oder ihren Mischungen, oder ausgewählt aus Monomeren mit ethylenischer Unsättigung und einer Dicarbonsäure-Funktion, wie Croton-, Isocroton-, Zimt-, Itacon-, Maleinsäure, oder auch Carbonsäureanhydriden, wie Maleinsäureanhydrid, oder ausgewählt aus Monomeren mit ethylenischer Unsättigung und einer Sulfonsäure-Funktion, wie 2-Acrylamido-2-methylpropansulfonsäure, Natriummethallylsulfonat, Vinylsulfonsäure und Styrolsulfonsäure, oder sogar auch ausgewählt aus Monomeren mit ethylenischer Unsättigung und einer Phosphorsäure-Funktion, wie Vinylphosphorsäure, Ethylenglykolmethacrylatphosphat, Propylenglykolmethacrylatphosphat, Ethylenglykolacrylatphosphat, Propylenglykolacrylatphosphat und ihren Ethoxylaten, oder sogar auch ausgewählt aus Monomeren mit ethylenischer Unsättigung und einer Phosphonsäure-Funktion, wie Vinylphosphonsäure, oder ihren Mischungen.

11. Trockenpigmente von co-gemahlenem GCC und PCC, **dadurch gekennzeichnet, dass** diese mindestens ein Co-Mahlmittel von GCC und von PCC enthalten, das mindestens ein Homopolymer und/oder mindestens ein Copolymer von Acrylsäure, teilweise neutralisiert, ist, und dessen molarer Neutralisationsgrad der Säurefunktionen kleiner als 75 %, bevorzugt kleiner als 50 % und besonders bevorzugt kleiner als 20 %, der Gesamtheit der Säurefunktionen ist.

12. Trockenpigmente von co-gemahlenem GCC und PCC nach Anspruch 11, **dadurch gekennzeichnet, dass** diese einen Prozentsatz, bezogen auf das Trockengewicht, von PCC in Bezug auf das Gesamttrockengewicht von GCC und von PCC, zwischen 10 % und 90 %, bevorzugt zwischen 20 % und 80 %, besonders bevorzugt zwischen 30 % und 70 %, enthalten, und dadurch, dass diese 0,5 % bis 2 %, bezogen auf das Trockengewicht, des Co-Mahlmittels von GCC und von PCC in Bezug auf das Gesamttrockengewicht von GCC und von PCC enthalten.

13. Trockenpigmente von co-gemahlenem GCC und PCC nach einem der Ansprüche 11 oder 12, **dadurch gekennzeichnet, dass** das Co-Mahlmittel von GCC und von PCC:
- neutralisiert ist durch Hydroxide, Carbonate, Hydrogenocarbonate von Natrium und Kalium, Hydroxide, Oxide von Calcium und Magnesium, Ammoniak oder ihre Mischungen, bevorzugt durch Hydroxide, Carbonate, Hydrogenocarbonate von Natrium und Kalium, Ammoniak oder ihre Mischungen, und bevorzugt durch Natriumhydroxid;
- ein Molekulargewicht zwischen 4.000 g/mol und 15.000 g/mol, bevorzugt zwischen 4.000 g/mol und 10.000 g/mol, aufweist;
- einen Polymolekularitätsindex zwischen 1,5 und 3,5, bevorzugt zwischen 1,5 und 2,5, aufweist;
- wenn es sich um ein Copolymer von Acrylsäure handelt, mindestens ein anderes Monomer als Acrylsäure umfasst, ausgewählt aus Monomeren mit ethylenischer Unsättigung und einer Monocarbonsäure-Funktion, wie Methacrylsäure, oder auch Halbestern von Disäuren, wie C₁-C₄-Monoestern von Malein- oder Itaconsäure, oder ihren Mischungen, oder ausgewählt aus Monomeren mit ethylenischer Unsättigung und einer Dicarbonsäure-Funktion, wie Croton-, Isocroton-, Zimt-, Itacon-, Maleinsäure, oder auch Carbonsäureanhydriden, wie Maleinsäureanhydrid, oder ausgewählt aus Monomeren mit ethylenischer Unsättigung und einer Sulfonsäure-Funktion, wie 2-Acrylamido-2-methylpropansulfonsäure, Natriummethallylsulfonat, Vinylsulfonsäure und Styrolsulfonsäure, oder sogar auch ausgewählt aus Monomeren mit ethylenischer Unsättigung und einer Phosphorsäure-Funktion, wie Vinylphosphorsäure, Ethylenglykolmethacrylatphosphat, Propylenglykolmethacrylatphosphat, Ethylenglykolacrylatphosphat, Propylenglykolacrylatphosphat und ihren Ethoxylaten, oder sogar auch ausgewählt aus Monomeren mit ethylenischer Unsättigung und einer Phosphonsäure-Funktion, wie Vinylphosphonsäure, oder ihren Mischungen.

14. Trockenpigmente von co-gemahlenem GCC und PCC nach einem der Ansprüche 11 bis 13, **dadurch gekennzeichnet, dass** diese auch mindestens ein Dispergiermittel von PCC enthalten, das ein Homopolymer und/oder ein Copolymer von Acrylsäure ist, wobei alle folgenden Charakteristiken zusammengeführt werden:
- es weist einen molaren Neutralisationsgrad der Säurefunktionen von mehr als 80 %, bevorzugt mehr als 90 %, der Gesamtheit der Säurefunktionen auf, und ist besonders bevorzugt vollständig neutralisiert;
- es weist ein Molekulargewicht zwischen 10.000 g/mol und 15.000 g/mol, bevorzugt zwischen 12.000 g/mol und 14.000 g/mol, auf;
- es weist einen Polymolekularitätsindex zwischen 1,5 und 2,5 auf.

15. Verwendung von wässrigen Suspensionen von co-gemahlenem GCC und PCC nach einem der Ansprüche 5 bis 10, und von Trockenpigmenten von co-gemahlenem GCC und PCC nach einem der Ansprüche 11 bis 14, bei der Herstellung von Papier und insbesondere bei der Beschichtung von Papierblättern und bei der Herstellung von Papierblättern, und bei der Herstellung von Anstrichfarben.

## Claims

1. Use, in a method for manufacturing co-ground GCC and PCC comprising the steps of:
1. preparation
(a) of an aqueous suspension of GCC, possibly comprising at least one dispersing agent and/or at least one grinding aid agent,
(b) and of an aqueous suspension of PCC, possibly comprising at least one dispersing agent,
2. co-grinding of said aqueous suspensions of GCC and PCC, as prepared during step 1),
3. possibly concentration of the aqueous suspension of the co-ground GCC and PCC, as obtained after step 2),
4. possibly drying of the aqueous suspension of the co-ground GCC and PCC, as obtained after step 2) or 3),
of a co-grinding agent, **characterised in that**:
(a) said agent consists of a least one homopolymer and/or of at least one copolymer of acrylic acid, which is partially neutralised, and the molar rate of neutralisation of the acid functions of which is less than 75%, preferably less than 50%, and very preferably less than 20% of the total of the acid functions,
(b) and **in that** it is introduced:
- between step 1) and step 2), into the aqueous suspension of GCC prepared in step 1a) and/or into the aqueous suspension of PCC prepared in step 1b) and/or into the mixture of these two suspensions,
- and/or during step 2) of co-grinding,
- and possibly between step 2) and step 3),
- and possibly during step 3).

2. Use according to claim 1, **characterised in that** from 0.5% to 2% by dry weight of the co-grinding agent is used, relative to the total dry weight of GCC and PCC, and **in that** the co-grinding agent:
- is neutralized by sodium hydroxide, potassium hydroxide, sodium carbonate, potassium carbonate, sodium hydrogencarbonate, potassium hydrogencarbonate, calcium hydroxide, magnesium hydroxide, calcium oxide, magnesium oxide, ammonium hydroxide or their mixtures, preferably by sodium hydroxide, potassium hydroxide, sodium carbonate, potassium carbonate, sodium hydrogencarbonate, potassium hydrogencarbonate, ammonium hydroxide or their mixtures, and very preferably by sodium hydroxide ;
- has a molecular weight of between 4,000 g/mol and 15,000 g/mol, preferably between 4,000 g/mol and 10,000 g/mol ;
- and has a polymolecularity index of between 1.5 and 3.5, preferably between 1.5 and 2.5 ;
- when it is a copolymer of acrylic acid, has at least one monomer other than acrylic acid chosen from among the ethylenic unsaturation comprising monomers with a monocarboxylic function such as methacrylic acid, or the diacid hemiesters such as the C₁ to C₄ monoesters of the maleic or itaconic acids, or their mixtures, or chosen from among the ethylenic unsaturation comprising monomers with a dicarboxylic function such as crotonic, isocrotonic, cinnamic, itaconic or maleic acid, or the carboxylic acid anhydrides, such as maleic anhydride or chosen from among the ethylenic unsaturation comprising monomers with a sulfonic function such as 2-acrylamido-2-methyl-propane-sulfonic acid, sodium methallylsulfonate, sulfonic vinyl acid and sulfonic styrene acid or chosen from among the ethylenic unsaturation comprising monomers with a phosphoric function such as phosphoric vinyl acid, ethylene glycol methacrylate phosphate, propylene glycol methacrylate phosphate, ethylene glycol acrylate phosphate, propylene glycol acrylate phosphate and their ethoxylates or chosen from the ethylenic unsaturation monomers with a phosphonic function such as phosphonic vinyl acid, or their mixtures.

3. Use, according to one of claims 1 to 2, **characterised in that** the aqueous suspension of PCC prepared during step 1b) contains at least one dispersing agent of PCC which is a homopolymer and/or a copolymer of acrylic acid, combining all the following characteristics:
- a molar neutralisation rate of the acid functions greater than 80%, preferably greater than 90%, of the total of the acid functions, and which is very preferably totally neutralised ;
- a molecular weight of between 10,000 g/mol and 15,000 g/mol, preferably between 12,000 g/mol and 14,000 g/mol;
- a polymolecularity index of between 1.5 and 2.5.

4. Use, according to claim 3, **characterised:**
- **in that**, in the aqueous suspension of PCC prepared in step 1b), from 0.5% to 2%, preferably from 0.5% to 1% by dry weight of the dispersion agent of PCC is used, relative to the dry weight of PCC ;
- **in that** the dispersion agent of PCC is neutralised by sodium hydroxide, potassium hydroxide, sodium carbonate, potassium carbonate, sodium hydrogencarbonate, potassium hydrogencarbonate, ammonium hydroxide or their mixtures, and preferably by sodium hydroxide ;
- and **in that** the dispersing agent used in the suspension of PCC prepared in step 1b), when it is a copolymer of acrylic acid, has at least one monomer other than acrylic acid chosen from among the ethylenic unsaturation comprising monomers with a monocarboxylic function such as methacrylic acid, or the diacid hemiesters such as the C₁ to C₄ monoesters of the maleic or itaconic acids, or their mixtures, or chosen from among the ethylenic unsaturation comprising monomers with a dicarboxylic function such as crotonic, isocrotonic, cinnamic, itaconic or maleic acid, or the carboxylic acid anhydrides, such as maleic anhydride or chosen from among the ethylenic unsaturation comprising monomers with a sulfonic function such as 2-acrylamido-2-methyl-propane-sulfonic acid, sodium methallylsulfonate, sulfonic vinyl acid and sulfonic styrene acid or chosen from among the ethylenic unsaturation comprising monomers with a phosphoric function such as phosphoric vinyl acid, ethylene glycol methacrylate phosphate, propylene glycol methacrylate phosphate, ethylene glycol acrylate phosphate, propylene glycol acrylate phosphate and their ethoxylates or chosen from the ethylenic unsaturation comprising monomers with a phosphonic function such as phosphonic vinyl acid, or their mixtures.

5. Aqueous suspensions of co-ground GCC and PCC, **characterised in that** they contain at least one co-grinding agent of GCC and PCC which consists of at least one homopolymer and/or of a least one copolymer of acrylic acid, which is partially neutralised, and the molar neutralisation rate of the acid functions of which is less than 75%, preferably less than 50%, and very preferably less than 20%, of the total of the acid functions.

6. Aqueous suspensions of co-ground GCC and PCC according to claim 5, **characterised:**
- **in that** they contain from 0.5% to 2% by dry weight of the co-grinding agent of GCC and PCC, relative to the total dry weight of GCC and PCC ;
- **in that** the co-grinding agent of GCC and PCC is neutralised by sodium hydroxide, potassium hydroxide, sodium carbonate, potassium carbonate, sodium hydrogencarbonate, potassium hydrogencarbonate, calcium hydroxide, magnesium hydroxide, calcium oxide, magnesium oxide, ammonium hydroxide or their mixtures, preferably by sodium hydroxide, potassium hydroxide, sodium carbonate, potassium carbonate, sodium hydrogencarbonate, potassium hydrogencarbonate, ammonium hydroxide or their mixtures, and very preferably by sodium hydroxide ;
- **in that** the co-grinding agent of GCC and PCC has a molecular weight of between 4,000 g/mol and 15,000 g/mol, preferably between 4,000 g/mol and 10,000 g/mol ;
- **in that** the co-grinding agent of GCC and PCC has a polymolecularity index of between 1.5 and 3.5, preferably between 1.5 and 2.5 ;
- **in that** the co-grinding agent of GCC and PCC, when it is a copolymer of acrylic acid, has at least one monomer other than acrylic acid chosen from among the ethylenic unsaturation comprising monomers with a monocarboxylic function such as methacrylic acid, or the diacid hemiesters such as the C₁ to C₄ monoesters of the maleic or itaconic acids, or their mixtures, or chosen from among the ethylenic unsaturation comprising monomers with a dicarboxylic function such as crotonic, isocrotonic, cinnamic, itaconic or maleic acid, or the carboxylic acid anhydrides, such as maleic anhydride or chosen from among the ethylenic unsaturation comprising monomers with a sulfonic function such as 2-acrylamido-2-methyl-propane-sulfonic acid, sodium methallylsulfonate, sulfonic vinyl acid and sulfonic styrene acid or chosen from among the ethylenic unsaturation comprising monomers with a phosphoric function such as phosphoric vinyl acid, ethylene glycol methacrylate phosphate, propylene glycol methacrylate phosphate, ethylene glycol acrylate phosphate, propylene glycol acrylate phosphate and their ethoxylates or chosen from the ethylenic unsaturation comprising monomers with a phosphonic function such as phosphonic vinyl acid, or their mixtures.

7. Aqueous suspensions of co-ground GCC and PCC according to one of claims 5 or 6, **characterised in that** they contain a percentage by dry weight of PCC, relative to the total dry weight of GCC and PCC of between 10% and 90%, preferably between 20% and 80%, very preferably between 30% and 70%, and **in that** they contain a percentage by total dry weight of PCC and GCC, relative to the total weight of the suspension, greater than 70%, preferably greater than 72%, very preferably greater than 74%.

8. Aqueous suspensions of co-ground GCC and PCC according to one of claims 5 to 7, **characterised in that** the particles of GCC and PCC which they contain:
- have a distribution factor (100 x d₃₀/d₇₀, where dₓ designates the average diameter such that x% by weight of the particles have a diameter of less than this average diameter) greater than 30, preferably greater than 40, very preferably greater than 45 ;
- and have a median diameter of less than 0.7 µm, preferably less than 0.5 µm, very preferably less than 0.3 µm.

9. Aqueous suspensions of co-ground GCC and PCC according to one of claims 5 to 8, **characterised in that** they contain at least one dispersing agent of PCC which is a homopolymer and/or a copolymer of acrylic acid, combining all the following characteristics:
- a molar neutralisation rate of the acid functions greater than 80%, preferably greater than 90%, of the total of the acid functions, and which is very preferably totally neutralised ;
- a molecular weight of between 10,000 g/mol and 15,000 g/mol, preferably between 12,000 g/mol and 14,000 g/mol;
- a polymolecularity index of between 1.5 and 2.5.

10. Aqueous suspensions of co-ground GCC and PCC according to claim 9, **characterised:**
- **in that** they contain from 0.5% to 2%, preferably from 0.5% to 1%, by dry weight of said dispersing agent of the PCC, relative to the dry weight of PCC ;
- **in that** the dispersing agent of PCC is neutralised by sodium hydroxide, potassium hydroxide, sodium carbonate, potassium carbonate, sodium hydrogencarbonate, potassium hydrogencarbonate, ammonium hydroxide or their mixtures, and preferably by sodium hydroxide ;
- **in that** the dispersion agent of PCC, when it is a copolymer of acrylic acid, has at least one monomer other than acrylic acid chosen from among the ethylenic unsaturation comprising monomers with a monocarboxylic function such as methacrylic acid, or the diacid hemiesters such as the C₁ to C₄ monoesters of the maleic or itaconic acids, or their mixtures, or chosen from among the ethylenic unsaturation comprising monomers with a dicarboxylic function such as crotonic, isocrotonic, cinnamic, itaconic or maleic acid, or the carboxylic acid anhydrides, such as maleic anhydride or chosen from among the ethylenic unsaturation comprising monomers with a sulfonic function such as 2-acrylamido-2-methylpropane-sulfonic acid, sodium methallylsulfonate, sulfonic vinyl acid and sulfonic styrene acid or chosen from among the ethylenic unsaturation comprising monomers with a phosphoric function such as phosphoric vinyl acid, ethylene glycol methacrylate phosphate, propylene glycol methacrylate phosphate, ethylene glycol acrylate phosphate, propylene glycol acrylate phosphate and their ethoxylates or chosen from the ethylenic unsaturation comprising monomers with a phosphonic function such as phosphonic vinyl acid, or their mixtures.

11. Dry pigments of co-ground GCC and PCC, **characterised in that** they contain at least one co-grinding agent of GCC and PCC which is at least one homopolymer and/or a least one copolymer of acrylic acid, which is partially neutralised, and the molar neutralisation rate of the acid functions of which is less than 75%, preferably less than 50%, and very preferably less than 20% of the total of the acid functions.

12. Dry pigments of co-ground GCC and PCC according to claim 11, **characterised in that** they contain a percentage by dry weight of PCC relative to the total dry weight of GCC and PCC of between 10% and 90%, preferably between 20% and 80%, very preferably between 30% and 70% and **in that** they contain from 0.5% to 2% by dry weight of said co-grinding agent of GCC and PCC, relative to the total dry weight of GCC and PCC.

13. Dry pigments of co-ground GCC and PCC according to one of claims 11 or 12, **characterised in that** the co-grinding agent of GCC and PCC:
- is neutralised by sodium hydroxide, potassium hydroxide, sodium carbonate, potassium carbonate, sodium hydrogencarbonate, potassium hydrogencarbonate, calcium hydroxide, magnesium hydroxide, calcium oxide, magnesium oxide, ammonium hydroxide or their mixtures, preferably by sodium hydroxide, potassium hydroxide, sodium carbonate, potassium carbonate, sodium hydrogencarbonate, potassium hydrogencarbonate, ammonium hydroxide or their mixtures, and very preferably by sodium hydroxide;
- has a molecular weight of between 4,000 g/mol and 15,000 g/mol, preferably between 4,000 g/mol and 10,000 g/mol ;
- has a polydispersity index of between 1.5 and 3.5, preferably between 1.5 and 2.5 ;
- when it is a copolymer of acrylic acid, has at least one monomer other than acrylic acid chosen from among the ethylenic unsaturation comprising monomers with a monocarboxylic function such as methacrylic acid, or the diacid hemiesters such as the C₁ to C₄ monoesters of the maleic or itaconic acids, or their mixtures, or chosen from among the ethylenic unsaturation comprising monomers with a dicarboxylic function such as crotonic, isocrotonic, cinnamic, itaconic or maleic acid, or the carboxylic acid anhydrides, such as maleic anhydride or chosen from among the ethylenic unsaturation comprising monomers with a sulfonic function such as 2-acrylamido-2-methyl-propane-sulfonic acid, sodium methallylsulfonate, sulfonic vinyl acid and sulfonic styrene acid or chosen from among the ethylenic unsaturation comprising monomers with a phosphoric function such as phosphoric vinyl acid, ethylene glycol methacrylate phosphate, propylene glycol methacrylate phosphate, ethylene glycol acrylate phosphate, propylene glycol acrylate phosphate and their ethoxylates or chosen from the ethylenic unsaturation comprising monomers with a phosphonic function such as phosphonic vinyl acid, or their mixtures.

14. Dry pigments of co-ground GCC and PCC according to one of claims 11 to 13, **characterised in that** they also contain at least one dispersing agent of PCC which is a homopolymer and/or a copolymer of acrylic acid, combining all the following characteristics:
- it has a molar neutralisation rate of the acid functions greater than 80%, preferably greater than 90% of the total of the acid functions, and is very preferably totally neutralised ;
- it has a molecular weight of between 10,000 g/mol and 15,000 g/mol, preferably between 12,000 g/mol and 14,000 g/mol;
- it has a polymolecularity index of between 1.5 and 2.5.

15. Use of the aqueous suspensions of co-ground GCC and PCC according to one of claims 5 to 10, and the dry pigments of co-ground GCC and PCC according to one of claims 11 to 14, in the manufacture of paper and notably in coating of paper sheet and in the manufacture of paper sheet, and in the manufacture of paints.
